# EUROPEAN PATENT APPLICATION

(11) **EP 1 928 130 A2**
(43) Date of publication of application: **04.06.2008**
(21) Application number: 07022204.7
(22) Date of filing: 15.11.2007
(51) Int. Cl.: H04L 12/56

(54) **Apparatuses and methods for performing initialization of the Packet Data Convergence Protocol PDCP in a mobile communication system**

(30) Priority: 15.11.2006 KR 20060113057; 23.07.2007 KR 20070073497
(71) Applicant: Samsung Electronics Co., Ltd., Suwon-si, Gyeonggi-do 442-743 (KR)
(72) Inventor: Kim, Soeng-Hun, Suwon-si Gyeonggi-do (KR); Jeong, Kyeong-In, Suwon-si Gyeonggi-do (KR); Van Lieshout, Gert Jan, Middlesex TW18 4QE (GB); Van Der Velde, Himke, Staines Middleswx TW18 4QE (GB)
(74) Representative: Lang, Johannes

(57) **Abstract**

Provided is an apparatus and method for transmitting/receiving a ciphered packet in a mobile communication system. The apparatus and method perform initialization of a Packet Data Convergence Protocol (PDCP) in connection with transmission/reception of a ciphered packet including a compressed header, thereby preventing packet loss from occurring, and minimizing waste of limited transmission resources.

## Description

### BACKGROUND OF THE INVENTION

### 1. Field of the Invention

The present invention relates to an apparatus and method for transmitting/receiving a packet in a mobile communication system, and more particularly to an apparatus for resetting a packet data convergence protocol in order to transmit/receive a ciphered packet including a compressed header, and an reset method.

### 2. Description of the Related Art

The Universal Mobile Telecommunication Service (UMTS) system is a 3^{rd} generation asynchronous mobile communication system using a wideband Code Division Multiple Access (CDMA) scheme based on Global System for Mobile Communications (GSM) and General Packet Radio Services (GPRS), both of which are European mobile communication systems.

Generally, it has been defined that ciphering and deciphering of data in the UMTS system are performed by a Radio Link Control (RLC). Therefore, in the UMTS system, when a problem related to ciphering and/or deciphering of data occurs upon transmission/reception of data, that is, when a problem related to confidentiality and/or security of data occurs, a corresponding RLC entity is initialized to solve the problem related to ciphering and/or deciphering of data. This is because the confidentiality and security in connection with transmission/reception of data are very important factors in terms of the reliability of user information.

With such a service environment, mobile communication systems currently require a method for transmitting a large amount of data at a high speed by using an Internet protocol, and necessitates more a detailed scenario for ciphering and deciphering in relation to the data.

That is, with the development of mobile communication systems, it is currently being discussed whether the ciphering and deciphering of data will be performed continuously by the RLC entity or will be performed by an upper entity other than the RLC entity. processing erroneous data when a problem related to data ciphering and/or deciphering in a specific entity occurs.

### SUMMARY OF THE INVENTION

Accordingly, the present invention has been made to solve the above-mentioned problems occurring in the prior art, and the present invention provides an apparatus and method for transmitting/receiving a ciphered packet including a compressed header in a mobile communication system.

Also, the present invention provides an apparatus and method for performing ciphering and deciphering by an entity other than an entity performing ciphering and deciphering in the conventional UMTS system in the next generation mobile communication system.

Also, the present invention provides an apparatus and method for processing a packet with a minimized processing delay, when decompressing a ciphered packet including a compressed header has failed in a mobile communication system.

Also, the present invention provides an apparatus and method for transmitting/receiving a packet through transmission/reception of a control message between specific entities when a ciphered packet including a compressed header is decompressed in a mobile communication system.

Also, the present invention provides an apparatus and method for enabling a Packet Data Convergence Protocol (PDCP) layer to identify a failure in ciphering of a packet and to perform packet synchronization according to ciphering and/or deciphering in a mobile communication system.

Also, the present invention provides an apparatus and method for resetting a Packet Data Convergence Protocol (PDCP) in a mobile communication system.

Also, the present invention provides an apparatus and method for transmitting an RLC control packet including a PDCP control packet in a mobile communication system.

Also, the present invention provides an apparatus and method for transmitting/receiving a Radio Resource Control (RRC) message to initialize a PDCP in a mobile communication system.

In accordance with an aspect of the present invention, there is provided a method for transmitting/receiving a ciphered packet in a mobile communication system, the method including sensing, by a receiving-side Packet Data Convergence Protocol (PDCP) entity, that header decompression of a received packet has failed, and transmitting a PDCP reset message to a transmitting-side PDCP entity; when receiving the PDCP initialization message, transmitting, by the transmitting-side PDCP entity, a response message that includes a new hyper-frame number used for ciphering of a compressed header to the receiving-side PDCP entity; and receiving, by the receiving-side PDCP entity, the response message, and deciphering packets received after PDCP reset by means of the new hyper-frame number.

In accordance with another aspect of the present invention, there is provided a method for transmitting/receiving a ciphered packet in a mobile communication system, the method including sensing, by a receiving-side Packet Data Convergence Protocol (PDCP) entity, a failure of header decompression of a received packet; when the header decompression of the received packet has failed, transmitting, by the receiving-side PDCP entity, a message informing that PDCP re-establishment is required to a transmitting-side Radio Resource Control (RRC) entity through a receiving-side RRC entity; and performing, by the receiving-side RRC entity and the transmitting-side RRC entity, the PDCP re-establishment.

In accordance with still another aspect of the present invention, there is provided a method for transmitting/receiving a ciphered packet in a mobile communication system, the method including determining, by a receiving apparatus, to initialize a Packet Data Convergence Protocol (PDCP) when sensing that deciphering of a received packet has failed, and transmitting a Layer 2 RESET REQUEST message including a serial number of a highest packet, a header of which has been decompressed without error, to a transmitting apparatus; performing, by the transmitting apparatus, PDCP reset in response to the Layer 2 RESET REQUEST message, newly determining a hyper-frame number in connection with ciphering for transmission of a packet next to a packet with the serial number, and transmitting a Layer 2 RESET RESPONSE message including the newly determined hyper-frame number to the receiving apparatus; and performing, by the receiving apparatus, deciphering with respect to packets next to the packet of the serial number, by means of the newly determined hyper-frame number, thereby receiving the packets.

In accordance with still another aspect of the present invention, there is provided an apparatus for transmitting a ciphered packet in a mobile communication system, the apparatus including a Packet Data Convergence Protocol (PDCP) controller for receiving a message for PDCP reset setting from a Radio Link Control (RLC) controller, setting a hyper-frame number corresponding to ciphering of the packet, and performing a control operation such that the hyper-frame number is inserted into a response message and is transmitted; and a transmission buffer for storing and discarding packets according to an instruction of the PDCP controller.

In accordance with still another aspect of the present invention, there is provided an apparatus for receiving a ciphered packet in a mobile communication system, the apparatus including a Packet Data Convergence Protocol (PDCP) controller for performing header decompression with respect to received packets including a compressed header, determining PDCP reset when it is sensed that the header decompression has failed, and receiving a response message that includes a hyper-frame number newly determined corresponding to the PDCP reset from a transmitting apparatus; and a Radio Link Control (RLC) controller for notifying the transmitting apparatus of the PDCP reset through a control message, and storing or discarding the received packet according to a control of the PDCP controller.

### BRIEF DESCRIPTION OF THE DRAWINGS

The above and other aspects, features and advantages of the present invention will be more apparent from the following detailed description taken in conjunction with the accompanying drawings, in which:
FIG 1 is a block diagram illustrating an example of the next generation mobile communication system to which the present invention is applied;
FIG 2 is a block diagram illustrating the protocol stacks of the next generation mobile communication system to which the present invention is applied;
FIG. 3 is a block diagram schematically illustrating the configurations of a ciphering unit and a deciphering unit according to an exemplary embodiment of the present invention;
FIGs. 4A and 4B are views illustrating ciphering and deciphering operations according to an exemplary embodiment of the present invention;
FIG. 5 is a view illustrating the entire signal flow for PDCP reset according to a first embodiment of the present invention;
FIG. 6 is a flow chart illustrating the PDCP reset operation of a receiving apparatus according to the first embodiment of the present invention;
FIG. 7 is a flow chart illustrating the PDCP reset operation of a transmitting apparatus according to the first embodiment of the present invention;
FIG. 8 is a view illustrating the entire signal flow for PDCP reset according to a second embodiment of the present invention;
FIG. 9 is a flow chart illustrating the PDCP reset operation of a receiving apparatus according to the second embodiment of the present invention;
FIG. 10 is a flow chart illustrating the PDCP reset operation of a transmitting apparatus according to the second embodiment of the present invention;
FIG. 11 is a view illustrating the entire signal flow for PDCP RESET according to a third embodiment of the present invention;
FIG. 12 is a flow chart illustrating the PDCP RESET operation of a receiving apparatus according to the third embodiment of the present invention;
FIG. 13 is a flow chart illustrating the PDCP RESET operation of a transmitting apparatus according to the third embodiment of the present invention;
FIG. 14 is a view illustrating the entire signal flow for PDCP RESET according to a fourth embodiment of the present invention;
FIG. 15 is a flow chart illustrating the PDCP RESET operation of a receiving apparatus according to the fourth embodiment of the present invention;
FIG. 16 is a flow chart illustrating the PDCP RESET operation of a transmitting apparatus according to the fourth embodiment of the present invention;
FIG. 17 is a flow chart illustrating the PDCP RESET operation of a transmitting apparatus according to a fifth embodiment of the present invention;
FIG 18 is a view illustrating an example of RLC control information containing PDCP control information according to an exemplary embodiment of the present invention;
FIG. 19 is a view illustrating a procedure of performing in-sequence delivery with respect to a packet according to an exemplary embodiment of the present invention;
FIG. 20 is a flow chart illustrating the PDCP reset operation of a transmitting apparatus according to a sixth embodiment of the present invention;
FIG. 21 is a view illustrating the PDCP reset operation of a receiving apparatus according to a sixth embodiment of the present invention;
FIG. 22 is a block diagram illustrating the configuration of the transmitting apparatus according to the first, second, and third embodiments of the present invention;
FIG. 23 is a block diagram illustrating the configuration of the receiving apparatus according to the first, second, and third embodiments of the present invention;
FIG. 24 is a block diagram illustrating the configuration of the transmitting apparatus according to the fourth, fifth, and sixth embodiments of the present invention; and
FIG. 25 is a block diagram illustrating the configuration of the receiving apparatus according to the fourth, fifth, and sixth embodiments of the present invention.

### DETAILED DESCRIPTION OF THE EXEMPLARY EMBODIMENT

Hereinafter, preferred embodiments of the present invention will be described with reference to the accompanying drawings. In the following description, a detailed description of known functions and configurations incorporated herein will be omitted for the sake of clarity and conciseness. Further, various specific definitions found in the following description are provided only to help general understanding of the present invention, and it is apparent to those skilled in the art that the present invention can be implemented without such definitions.

Hereinafter, the present invention will be described with a mobile communication system in which data is transmitted/received through an Internet protocol as an example. The present invention provides a method for transmitting/receiving data generated in real time in the system. A voice packet may be regarded as the most basic form of real-time data. Here, the term "packet" represents a predetermined amount of data which is continuously generated. Hereinafter, for the convenience of description, all types of data will be defined and used as packet data. Also, although the term "data" is used together with the term "packet" in the following description, each of the terms "data" and "packet" represent information for a specific service and/or a set of the information, and the terms "data" and "packet" are used with the same meaning.

Therefore, the present invention provides an apparatus and method for ciphering/deciphering a voice packet which is transmitted/received, for example, in a mobile communication system in which the voice packet is transmitted/received through an Internet protocol in connection with support of various service according to the development of mobile communication systems. The voice packet includes different headers depending on Internet protocol stacks, and the headers include different compressed headers depending on corresponding specific entities.

First, the following description will be given regarding the mobile communication system. The 3^{rd} Generation Partnership Project (3GPP) responsible for standardization of the Universal Mobile Telecommunication Service (UMTS) is currently discussing the standardization of a Long Term Evolution (LTE) system, which is the next generation mobile communication system based on the UMTS system.

The LTE system is technology capable of providing the maximum 100 Mbps data rate by applying an Orthogonal Frequency Division Multiplexing (OFDM) scheme based on the UMTS system. Also, there is discussion in connection with the LTE system concerning the ciphering and deciphering of a transmitted/received packet, which will be performed in an upper layer of an RLC entity.

The present invention defines an entity for performing ciphering and/or deciphering in transmitting/receiving a packet in an LTE system. Particularly, the present invention defines the detailed operations of the entity performing the ciphering and/or deciphering of a packet, i.e., defines an reset execution condition for performing reset so as to solve a problem due to the ciphering and/or deciphering operation, and transmission/reception procedures of a request message/a response message for the reset, and provides an apparatus and method for supporting the operations of the entity.

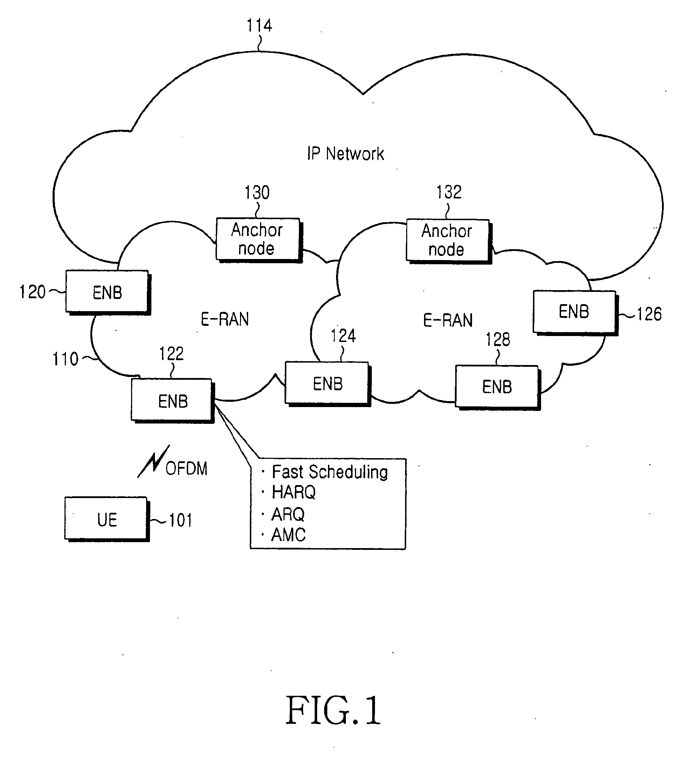

FIG 1 is a block diagram illustrating the configuration of an LTE system to which the present invention is applied.

An Evolved UMTS Radio Access Network (E-RAN) 110 may be simplified into a two node structure of evolved Node Bs (hereinafter, "ENB" or "Node B") 120, 122, 124, 126 and 128, and an anchor node 130 and 132.

A User Equipment (UE) 101 includes all types of communication devices used to access an Internet protocol (IP) network through the E-RAN 110. Therefore, the UE 101 includes mobile communication apparatuses capable of making Internet communication. Meanwhile, the communication apparatuses include all access devices, such as a terminal, a portable telephone, a personal digital assistant, a portable computer, etc., which are mobile and can communicate with a specific communication network. In addition, the communication apparatuses include all electronic communication devices capable of communicating with a specific node of a network which supports a specific service. Hereinafter, the communication apparatuses will be inclusively referred to as a "user equipment." For example, in FIG. 1, a transmitting apparatus and a receiving apparatus will be regarded as a UE or node B of a system which manages a UE.

Each of the ENBs 120 to 128 corresponds to a node B of an existing UMTS system, and includes an apparatus for communicating with the UE 101 through connection of a radio channel. Here, each of the ENBs 120 to 128 will perform a more complicated function than the conventional base station or node B. In addition, the LTE system necessitates an apparatus which performs scheduling after collecting situation information of multiple UEs in order to provide a real-time service and/or to provide all user traffic through a shared channel. In connection with this, the ENBs 120 to 128 are expected to perform scheduling after collecting situation information of UEs, and to perform a function related to management of radio resources. Therefore, it is expected that the ENB include a control protocol, such as a Radio Resource Control (RRC).

Also, it is expected that the LTE system will employ an Adaptive Modulation & Coding (AMC) scheme, which determines a modulation scheme and a channel coding rate according to a channel state of the UE 101.

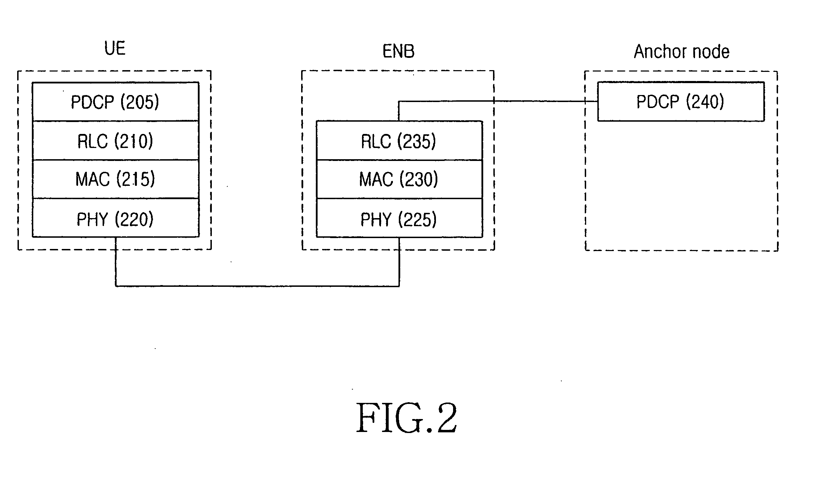

FIG. 2 is a block diagram schematically illustrating the protocol stacks of an LTE system according to the present invention.

A Packet Data Convergence Protocol (PDCP) layer 205 or 240 functions to compress/decompress an Internet Protocol (IP) header, and to cipher and decipher a packet which is transmitted/received.

A Radio Link Control (RLC) layer 210 or 235 performs an operation of resizing a PDCP Packet Data Unit (PDCP PDU), which has been received from an upper layer thereof, i.e., from the PDCP layer 205 or 240, to an appropriate transmission size, and performs an Automatic Repeat reQuest (ARQ) operation for the resized packets.

Here, the Packet Data Unit (PDU) represents a packet output from a certain specified protocol layer, so a packet of a layer is referred to as a "corresponding protocol's PDU."

The PDCP layer 205 or 240 and the RLC layer 210 or 235 may be configured according to services or according to flows of processors for the same service when communication is initiated according to support of a specific service. Therefore, a transmitting apparatus and/or a receiving apparatus can configure at least one PDCP entity (or PDCP layer) and at least one RLC entity (or RLC entity), and process service packets through each entity. An exemplary embodiment of the present invention will be described on the assumption that the PDCP entities 205 and 240 are located in a UE and an anchor node, respectively, and that the RLC entities 210 and 235 are located in the UE and the anchor node, respectively.

Meanwhile, Medium Access Control (MAC) layers 215 and 230 are connected to a plurality of RLC entities, multiplex RLC PDUs into a MAC PDU, and demultiplex the MAC PDU into RLC PDUs.

Each Physical layer 220 or 225 generates an OFDM symbol by performing channel-coding and modulation operations with respect to data received from an upper layer, and transmits the OFDM symbol to a receiving apparatus through a radio channel. Also, each Physical layer 220 or 225 performs demodulation and channel-decoding operations with respect to an OFDM symbol received through a radio channel, before transferring the OFDM symbol to an upper layer. In addition, the physical layer 220 or 225 may perform an operation, that is, a Hybrid ARQ (HARQ) operation, of detecting an error by channel-decoding a received packet and soft-combining the channel-decoded packet with a previously received packet. Also, the MAC layers 215 and 230 may perform an ARQ operation. Here, the error detection operation may be performed, for example, by using a Cyclic Redundancy Check (CRC) code, and may be achieved by means of various error detection codes.

Hereinafter, an exemplary embodiment of the present invention will be described about a case where the ciphering and deciphering of a packet which is transmitted/received are performed by a PDCP entity, which is an upper layer. Also, an exemplary embodiment of the present invention will be described about a case where, when deciphering has consecutively failed, the PDCP entity of a receiving apparatus senses it and performs an reset operation. Accordingly, a deciphering failure can be more accurately reported to a transmitting apparatus by an reset request of the receiving apparatus, thereby minimizing the loss of packets and the waste of transmission resources in terms of the entire system.

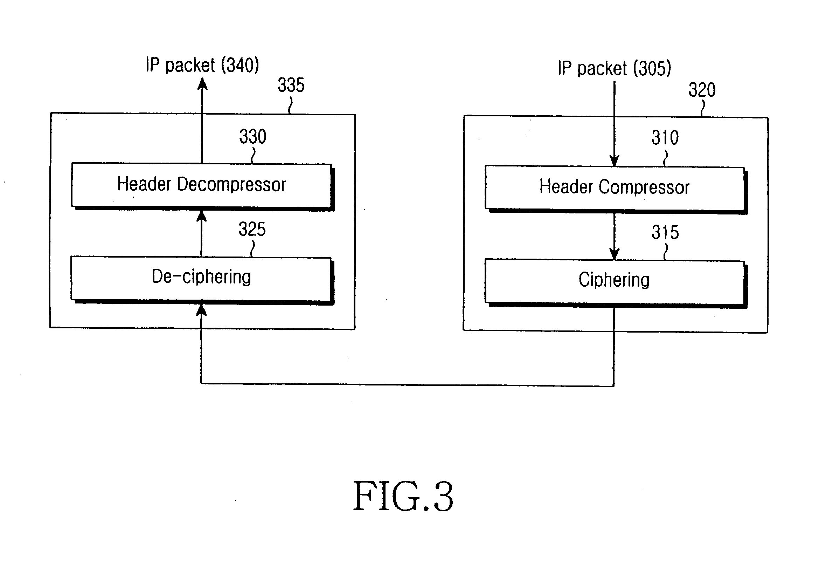

FIG. 3 is a block diagram schematically illustrating the configuration and operation of a PDCP entity according to an exemplary embodiment of the present invention.

According to an exemplary embodiment of the present invention, when a voice packet service is supported through an Internet protocol, the voice packet is subjected to an IP header compression and ciphering process in a transmitting apparatus, and is then transferred to a receiving apparatus. Also, the receiving apparatus performs a deciphering and decompressing process with respect to a received packet so as to verify the received packet. Here, the "ciphering" includes ciphering a specific user packet so that a voice packet transmitted/received through an Internet protocol can be prevented from being wiretapped by a third person.

First, in the transmitting apparatus, when an IP packet 305 generated from an upper layer arrives at a PDCP entity 320, the PDCP entity 320 compresses the IP header of the arrived packet through a header compressor 310 thereof, and ciphers a packet including the compressed header through a ciphering unit 315 thereof. Thereafter, the ciphered packet is transferred to an RLC entity, which is a lower layer.

Meanwhile, the receiving apparatus receives a packet through an RLC entity, which is a lower layer, and a deciphering unit 325 of a PDCP entity 335 in the receiving apparatus deciphers the received packet by means of a predetermined ciphering key. A header decompressor 330 decompresses the header of a corresponding packet to generate and transfer an IP packet 340 to an upper layer.

Here, the compression and decompression of the header of an IP packet may be performed using the RObust Header Compression (ROHC) protocol. Although the ROHC header compression results in a variable configuration and size according to actual compression operation states, the ROHC header compression includes a Serial Number (SN) and a CRC for error detection. Also, although an entity for performing ciphering and/or deciphering according to the present invention may differ from that in the conventional UMTS system, the present invention may employ the same ciphering and deciphering schemes/algorithms as those used in the prior art.

In other words, when receiving a header-compressed header packet, the header decompressor 330 releases the compressed header, and restores a packet by using an SN field of the header and other fields. Then, an error detection procedure using a CRC code is performed with respect to the decompressed packet, thereby checking if there is an error. If the error detection has failed, it means that the header has not been correctly decompressed, and in this case, the decompressed packet may be discarded. If a header decompression process is performed with respect to a packet of which deciphering has failed, the header decompression fails, so that the packet of which deciphering has failed has a high possibility of being discarded in the header decompression process.

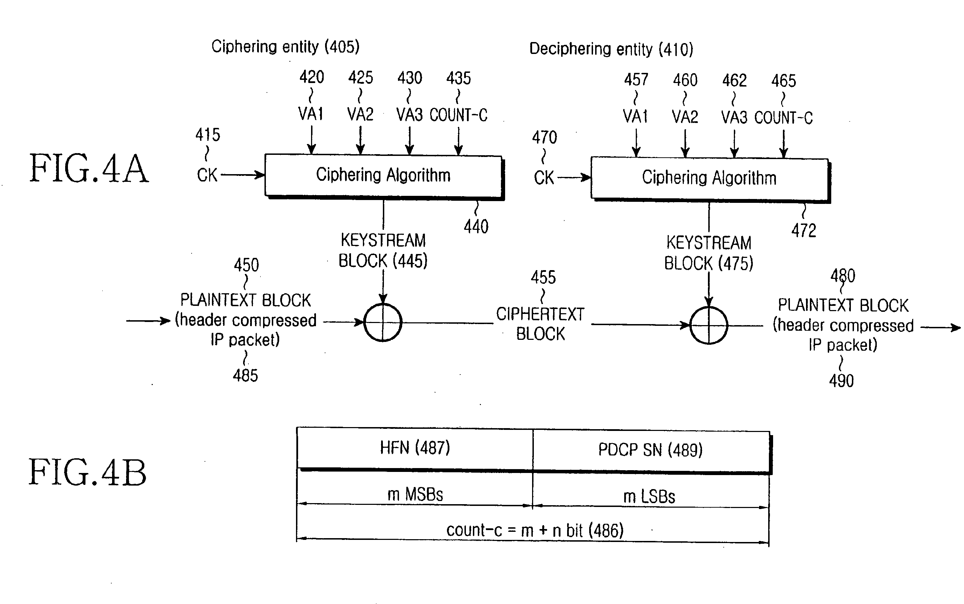

FIG 4A is a view illustrating ciphering and deciphering operations for a packet according to the present invention. Basically, a ciphering entity 405 and a deciphering entity 410 operate by using the same ciphering algorithm 440 and 472. Therefore, the ciphering and deciphering entities 405 and 410 perform ciphering and deciphering operations by means of the same Ciphering Key (CK) 415 and 470, and a plurality of ciphering parameters 420, 425, 430, 435, 457, 460, 462, and 465 according to the application of the ciphering algorithm.

The ciphering entity 405 receives a header-compressed IP packet 485, that is, a plaintext block 450, from an upper layer. The plaintext block is subjected to an exclusive-OR operation with a ciphering keystream block 445, which has been generated by a predetermined ciphering key 415 and a plurality of ciphering parameters 420, 425, 430, and 435, used in the ciphering algorithm, and is then output as a ciphertext block 455, which is ciphered data. The ciphered IP packet including the compressed header is transmitted to the receiving apparatus through a radio resource.

Generally, the ciphering entity 405 is included in the transmitting apparatus, and the deciphering entity 410 is included in the receiving apparatus.

Meanwhile, the deciphering entity 410 receives the ciphertext block 455 through a predetermined radio resource, and deciphers the received ciphertext block 455 by applying the same ciphering algorithm as that used in the transmitting apparatus. Accordingly, the deciphering entity 410 generates a deciphering keystream block 475 by using a predetermined ciphering key 470 and a plurality of ciphering parameters 457, 460, 462, and 465, and performs an exclusive-OR operation with respect to the deciphering keystream block 475 and the received ciphertext block 455, thereby outputting a plaintext block 480, that is, an IP packet 490 including a compressed header.

When the transmitting apparatus and the receiving apparatus use the same Ciphering Key (CK) and the same parameters by using the same ciphering algorithm, as described above, the receiving apparatus can normally restore an IP packet received from the transmitting apparatus. However, if even one among the ciphering key, the ciphering parameters, and the ciphering algorithm used in the receiving apparatus is different from that used in the transmitting apparatus, the receiving apparatus may generate an IP packet different from an IP packet transmitted from the transmitting apparatus.

Hereinafter, phenomena in which a receiving apparatus generates an error packet by using one among a different ciphering key, different ciphering parameters, and a different ciphering algorithm, from those used a transmitting apparatus will be inclusively referred to as a "deciphering failure."

Meanwhile, in connection with the ciphering algorithm, particularly, each ciphering count parameter (COUNT-C) 435, 465, and 486 among the ciphering parameters increases by one every packet with a given length, which is shown in FIG. 4B. Such a ciphering count parameter generally has a size of 32 bits, and particularly the Least Significant Bits (LSBs) in the given length of the CONUNT-C parameter 486 are transmitted, together with a ciphered packet. Meanwhile, the Most Significant Bits (MSBs) in the remainder of the given length have values which the ciphering entity and deciphering entity themselves can update. Therefore, a COUNT-C parameter assigns a PDCP PDU SN 489 to an LSB, and a Hyper-Frame Number (HFN) 487 is defined and used as an MSB of the COUNT-C parameter.

Thus, since the ciphering entity is located at the stage after the header compressor in the structure of the transmitting apparatus, a plaintext block to be ciphered in the future has the form of an IP packet including a compressed header. Therefore, when deciphering has failed, the header decompressor of a receiving apparatus continuously monitors a phenomenon that should not occur during the normal ROHC process.

To this end, the present invention defines a phenomenon that should not occur during the normal ROHC process, that is, a deciphering failure phenomenon, wherein, when such a phenomenon continuously occur a predetermined number N times, it is determined that deciphering has failed and a PDCP reset is performed.

Table 1 below shows briefly defined deciphering failure phenomena. The deciphering failure phenomena may be defined in more detail by a system operator.

**Table 1**

| | |
|---|---|
| | Header decompression has failed |
| | A packet other than an Initialize and Refresh (IR) packet uses an unknown context ID |
| | Receiving a packet in which an ROHC padding is used |
| | Receiving a packet in which an ROHC segmentation is used |
| | Error detection values are different; when an ROHC protocol is used, a compressor of a transmitting apparatus performs a CRC operation with respect to the entire header before compressing the header, and transmits a compressed header together with the CRC value. Therefore, an ROHC decompressor of a receiving apparatus decompresses a header, performs a CRC operation with respect to the decompressed header, compares the CRC value received together with the compressed header with a CRC value acquired from the decompressed header, and determines that the header decompression has failed if the compared CRC values are different. |

That is, the deciphering failure phenomenon may be caused by an actual malfunction of an ROHC decompressor, and may be caused even when a value of a portion corresponding to an ROHC header has been changed.

Here, the "Context IDentification (CID)" represents identification information used to identify a context when a compressed header is decompressed. The context stores a full header. Also, when the ROHC protocol is used, the header compressor transmits an IR packet several times first of all in order to initialize a context or to restore a failure. Therefore, the IR packet contains a full header and a CID to store the full header. Accordingly, the header decompressor of the receiving apparatus receives an IR packet and stores the full header, which is contained in the IR packet, in a context having a corresponding CID.

By such a construction, when the transmitting apparatus compresses a header corresponding to the same flow, and transmits the compressed header together with a CID in the future, a header receiver of the receiving apparatus can identify a corresponding context from a plurality of contexts by using a received CID, and restores the original header from the compressed header by means of the corresponding context. Therefore, since a new CID is sent through an IR packet according to the characteristics of the ROHC protocol, if the new CID is contained in a packet other than the IR packet, it has a high possibility of having been caused by a deciphering failure.

Meanwhile, when an ROHC protocol is used, an ROHC padding option and an ROHC segmentation option are used to operate, even in a lower layer, which restricts the size of a packet. However, since the size of a packet to be transmitted in the LTE system is variable, it is expected that it is unnecessary to use the options. Therefore, if an ROHC padding or ROHC segmentation is used with respect to a PDCP PDU, it is regarded as a deciphering failure. Meanwhile, whether the ROHC padding and/or the ROHC segmentation is used can be checked through the first byte of an ROHC packet.

Therefore, the receiving apparatus monitors whether or not the phenomena occur in the header decompression process. When the phenomena continuously occur a predetermined number N times, the receiving apparatus determines that a deciphering failure has occurred, and performs a PDCP RESET operation.

As described above, the phenomena, i.e., phenomena that can be regarded as a deciphering failure, are caused when header decompression has failed. Also, as described above, when header decompression has failed, the header decompressor discards a corresponding packet. Therefore, since a packet including a decompressed header is not output from the header decompressor although a packet has been input to the header decompressor, a PDCP reception entity can determine that decompression of a header in the packet has failed.

In other words, when a deciphering failure or header decompression failure continuously occurs the N number of times, it means that the header decompressor continuously discards "N" number of packets. That is, when it is sensed that the header decompressor has continuously discarded "N" number of packets, a PDCP entity can determine that a PDCP RESET execution condition has been met. In other words, when even one of packets corresponding to "N" packets is not output although the "N" packets have been input to the header decompressor, it can be determined that a PDCP RESET execution condition has been met.

Meanwhile, Table 2 below defines other reasons capable of causing a deciphering failure.

**Table 2**

| | |
|---|---|
| | A ciphering unit and a deciphering unit use different CKs |
| | A ciphering unit and a deciphering unit use different ciphering algorithms |
| | A ciphering unit and a deciphering unit use different parameters |

Here, other parameters, except for a CK, a ciphering algorithm, and a COUNT-C, are invariable after being reliably sent through a control message in a procedure of establishing a ciphering unit and a deciphering unit, i.e., there is no possibility that a deciphering failure occurs due to other parameters, except for the CK, the ciphering algorithm, and the COUNT-C.

In contrast, since the COUNT-C parameter has a value changed at every received packet, and particularly the HFN of the COUNT-C parameter has a value updated by a ciphering unit itself and a deciphering unit itself, the ciphering unit and deciphering unit may use different HFNs. Accordingly, when deciphering has failed, it is possible to determine that the deciphering failure has occurred due to HFN discord between the PDCP entities. Therefore, after completing a reset operation for a PDCP RESET, the ciphering unit notifies the deciphering of an HFN to be newly used so that the deciphering can synchronize an HFN thereof with the HFN to be newly used.

Also, when the deciphering has failed, previously transmitted PDCP PDUs become useless data. This is because deciphering has failed although the deciphering unit receives PDCP PDUs in a state in which the deciphering unit is unaware of a correct HFN. Therefore, when deciphering has failed, it is preferred to discard PDCP PDUs, which are not yet transmitted and are stored in an RLC buffer, although they have already been ciphered.

Embodiments of the present invention described below will be discussed with respect to procedures of re-establishing an HFN synchronization through a PDCP RESET process and resuming transmission of PDCP PDUs after it is determined that the HFN synchronization has been re-established. In addition, the embodiments of the present invention are based on discarding PDCP PDUs stored before an HFN synchronization is re-established according to the PDCP RESET process.

### First Embodiment

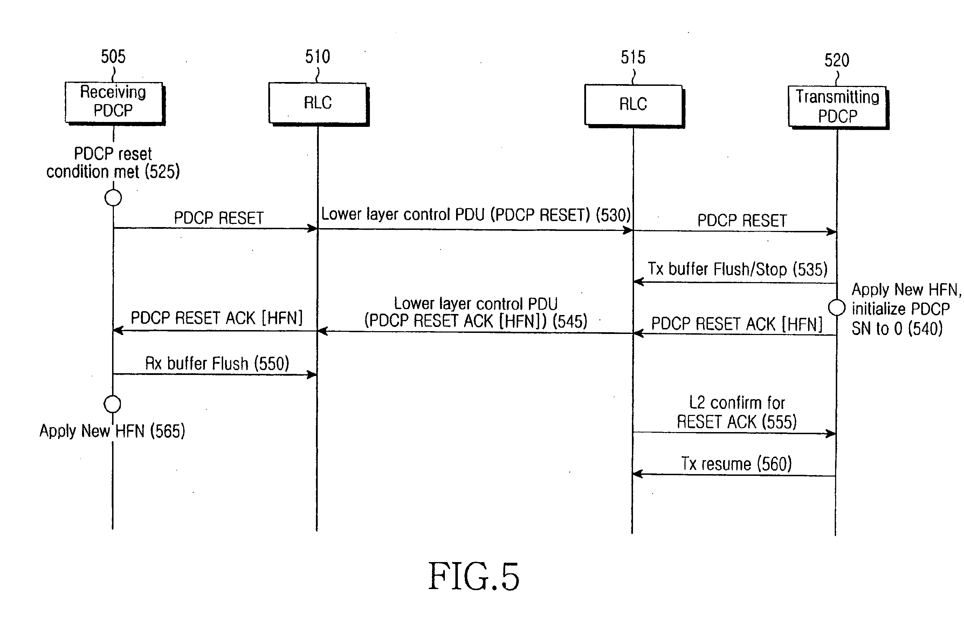

FIG. 5 is a view illustrating the entire operation according to a first embodiment of the present invention. The present invention will describe signaling between a transmitting apparatus and a receiving apparatus, which is performed to solve a problem that occurs when an error occurs during ciphering and/or deciphering in transmitting/receiving a packet between the transmitting apparatus and receiving apparatus. Hereinafter, the embodiments of the present invention will be described using a mobile broadcasting terminal including a transmitting apparatus and a receiving apparatus, wherein the receiving apparatus contains a receiving-side PDCP entity 505 and a receiving-side RLC entity 510, and the transmitting apparatus contains a transmitting-side RLC entity 515 and a transmitting-side PDCP entity 520, in connection with ciphering and deciphering, as an example. In addition, the embodiments of the present invention will describe a case where an ROHC protocol is used in connection with ciphering and deciphering, as an example.

Referring to FIG. 5, in step 525, the receiving-side PDCP entity 505 performs an ROHC header decompression operation with respect to a received packet, and senses that phenomena which should not occur during the ROHC header decompression process, i.e., phenomena regarded as a deciphering failure, have occurred a predetermined number N times or more. The deciphering failure phenomena may include the examples defined in Tables 1 and 2.

In step 530, the receiving-side PDCP entity 505 creates a PDCP RESET packet by performing reset for a PDCP packet, and transmits the PDCP RESET packet to the transmitting-side PDCP entity 520. In this case, since the PDCP RESET packet must be transmitted as soon as possible, the PDCP RESET packet may be transmitted through a control message of a lower layer. For example, the PDCP RESET packet may be inserted into an RLC control message to be transmitted.

The PDCP RESET packet is transmitted using the control message so that if the PDCP RESET packet is inserted into an RLC PDU and is transmitted, the receiving-side RLC entity 510 transmits the RLC PDU according to an assigned RLC serial number, and accordingly, the transmitting-side RLC entity 515 transfers the RLC PDU to the transmitting-side PDCP entity 520 according to the assigned RLC serial number, thereby causing unnecessary delay. However, when the PDCP RESET packet is inserted into an RLC control message and is transmitted, it is possible to transmit the PDCP RESET packet at the highest speed because the RLC control message has a higher priority than transmission of the general RLC PDU. Accordingly, it is possible to remove unnecessary delay caused when the PDCP RESET packet is inserted into the RLC PDU and is transmitted.

Therefore, according to the first embodiment of the present invention, a PDCP RESET packet is transmitted in the form of a control message through an RLC entity, and ultimately, the PDCP RESET packet is transmitted from the receiving-side PDCP entity 505 to the transmitting-side PDCP entity 520.

In step 535, the transmitting-side PDCP entity 520, which has received the PDCP RESET message, instructs the transmitting-side RLC entity 515 to discard RLC PDUs stored in an RLC transmission buffer and to stop RLC transmission (hereinafter, "Tx buffer Flush/Stop"). According to the "Tx buffer Flush/Stop" instruction, the transmitting-side RLC entity 515 stops transmitting all RLC PDUs, except for an RLC control message, until it receives a separate instruction.

In step 540, the transmitting-side PDCP entity 520 initializes a PDCP SN to "0," and determines a new HFN value, i.e., the transmitting-side PDCP entity 520 performs an reset operation with respect to PDCP PDUs to be transmitted. In step 545, the transmitting-side PDCP entity 520 inserts the newly determined HFN value into a PDCP RESET ACK message, and transmits the PDCP RESET ACK message to the receiving-side PDCP entity 505. In this case, the PDCP RESET ACK message is transmitted/received through the RLC entities 515 and 510 i.e., the PDCP RESET ACK message may be transmitted, after being inserted in the form of an RLC control message into a control message of a lower layer.

In addition, the transmitting-side PDCP entity 520 requests the transmitting-side RLC entity 515 to report whether or not the message has been transmitted to the transmitting-side PDCP entity 520 in order to confirm whether the PDCP RESET ACK message has been successfully transmitted.

Meanwhile, according to the transmission of the according to an exemplary embodiment of the present invention, the transmitting-side PDCP entity 520 ciphers subsequently-arriving packets by applying the newly set HFN and PDCP SN, and transmits the ciphered packets to the transmitting-side RLC entity 515. In this case, since the transmitting-side RLC entity 515 has previously received the temporary stop instruction of packet transmission in step 535, the transmitting-side RLC entity 515 does not transmit and temporarily stores the newly arranged PDCP PDUs in a transmission buffer.

Therefore, the transmitting-side RLC entity 515, which has confirmed that the PDCP RESET ACK message has been successfully transmitted, notifies the transmitting-side PDCP entity 520 that the message has been successfully transmitted, in step 555. In step 560, when confirming that the PDCP RESET ACK message has been successfully transmitted, the transmitting-side PDCP entity 520 instructs the transmitting-side RLC entity 515 to resume packet transmission. Then, the transmitting-side RLC entity 515 resumes transmission of the PDCP PDUs received and stored in the transmission buffer in step 540, that is, transmission of the PDCP PDUs to which the new HFN has been applied.

Meanwhile, the receiving-side PDCP entity 505, which has received the PDCP RESET ACK message in step 545, instructs the receiving-side RLC entity 510 to discard received packets in step 550, i.e., the receiving-side PDCP entity 505 instructs the receiving-side RLC entity 510 to empty a reception buffer. This is because PDCP PDUs stored in the reception buffer, which have been received before the PDCP RESET process, become useless data.

In other words, the current state corresponds to a state in which the transmitting-side PDCP entity 520 has not yet transmitted PDCP PDUs to which a newly set HFN has been applied. Thereafter, in step 565, the receiving-side PDCP entity 505 recognizes the newly set HFN included in the PDCP RESET ACK message, and performs a deciphering operation with respect to PDCP PDUs newly-received in step 560 by applying the newly set HFN.

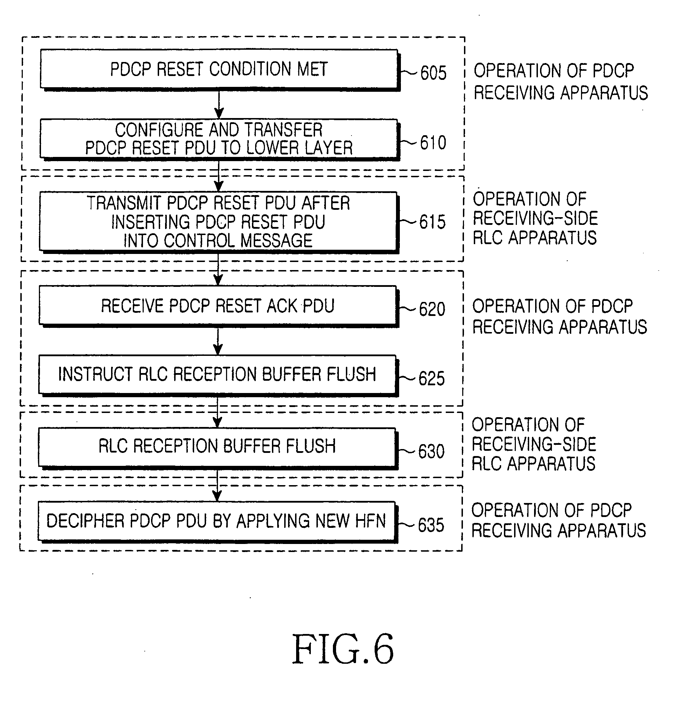

FIG 6 is a view illustrating the packet processing operation of the receiving apparatus according to the first embodiment of the present invention. Hereinafter, for simplicity of description, the first embodiment of the present invention will be described with respect to a receiving apparatus including a PDCP entity and an RLC entity, as an example. However, the present invention may be modified and applied to a case where a different entity performs a deciphering operation, as well as a case where a different entity is added for a deciphering operation.

Referring to FIG. 6, in step 605, a PDCP entity performs a deciphering operation with respect to received ciphered packets including compressed headers. During the deciphering process, is the PDCP entity senses that a PDCP RESET execution condition is necessary i.e., while the deciphering process is performed, the PDCP entity senses that phenomena that should not occur during the normal ROHC process are continuously occurring upon decompressing the header. Consequently, the PDCP entity determines that the deciphering has failed, and activates a PDCP RESET. In step 610, the PDCP entity creates and transfers a PDCP RESET packet to an RLC entity, which is a lower layer. The PDCP RESET packet contains type information representing that a specific PDCP PDU is a PDCP RESET PDU.

In step 615, the RLC entity inserts the received PDCP RESET packet into a control message, and transmits the control message to a transmitting apparatus.

Thereafter, in step 620, the PDCP entity receives a PDCP RESET ACK PDU from the transmitting apparatus. Through the PDCP RESET ACK PDU, the PDCP entity recognizes that the transmitting apparatus has completed a PDCP RESET with respect to previous packets, and identifies a newly determined HFN value.

In step 625, the PDCP entity instructs the RLC entity to discard packets which have been previously received and stored in a reception buffer. In step 630, the RLC entity discards useless packets from the reception buffer according to the instruction of the PDCP entity.

In step 635, the PDCP entity deciphers newly received PDCP PDUs by using an HFN which has been contained in the PDCP RESET ACK message and has been transmitted.

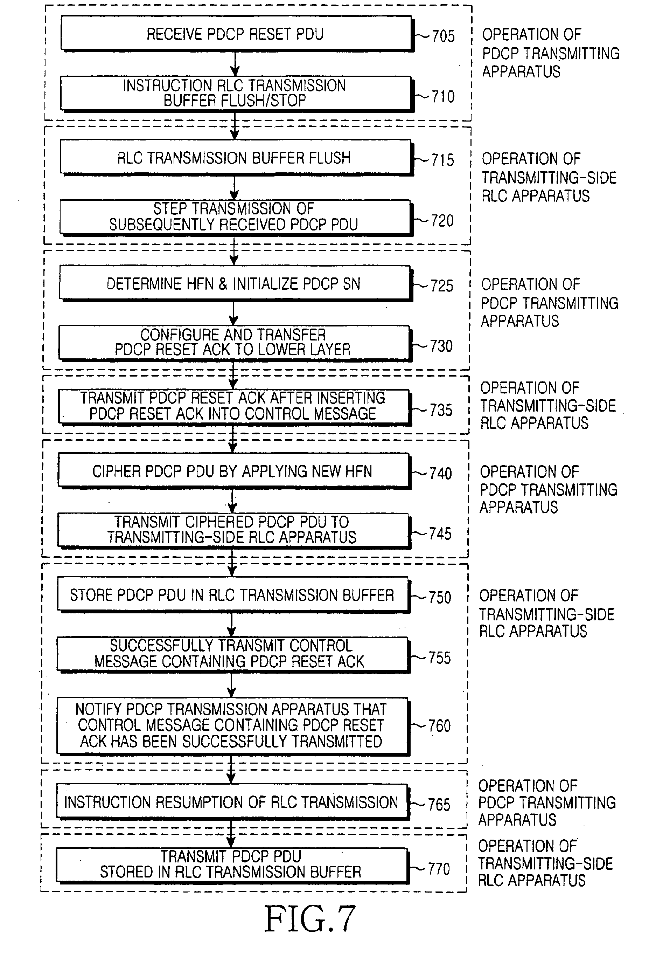

FIG. 7 is a view illustrating the packet processing operation of the transmitting apparatus according to the first embodiment of the present invention. Hereinafter, for simplicity of description, the first embodiment of the present invention will be described with respect to a transmitting apparatus including a PDCP entity and an RLC entity, as an example. However, the present invention may be modified and applied to a case where a different entity performs a ciphering operation, as well as a case where a different entity is added for a ciphering operation.

Referring to FIG. 7, in step 705, the PDCP entity receives a PDCP RESET packet from the receiving apparatus. The PDCP RESET packet is a specific PDCP PDU which contains type information representing that the specific PDCP PDU is a PDCP RESET PDU, and is transferred to the RLC entity, which is a lower layer.

In step 710, the PDCP entity instructs the RLC entity to discard packets stored in a transmission buffer and to stop transmitting packets. Accordingly, the RLC entity discards packets stored in the transmission buffer in step 715, and stops transmitting transmission packets in step 720.

In step 725, when receiving the PDCP RESET message, the PDCP entity completes the reset for PDCP packets by resetting a PDCP SN to "0," and then determines an HFN to be newly used. For example, the HFN may be determined as a value one higher than the value of the previous HFN. In step 730, the PDCP entity inserts the determined HFN into a PDCP RESET ACK message, and transfers the PDCP RESET ACK message to the RLC entity, which is a lower layer. In addition, the PDCP entity instructs the RLC entity to report whether or not the PDCP RESET ACK message has been successfully transmitted.

In step 735, the RLC entity inserts the PDCP RESET ACK message into a control message, and transmits the control message to the receiving apparatus.

Thereafter, the PDCP entity ciphers PDCP PDUs by using the newly determined HFN in step 740, and transfers the ciphered PDCP PDUs to the RLC entity in step 745.

In step 750, the RLC entity does not directly transmit received PDCP PDUs, and temporarily stores the received PDCP PDUs in the transmission buffer. Thereafter, when the RLC entity is notified that the receiving apparatus has successfully received the control message including the PDCP RESET ACK message, which has been transmitted in step 735, from the receiving apparatus in step 755, the RLC entity notifies the PDCP entity of the transmission success in step 760.

In step 765, the PDCP entity, which has recognized that PDCP RESET ACK message has been successfully transmitted, instructs the RLC entity to start transmitting packets.

Accordingly, in step 770, the RLC entity resumes transmission of PDCP PDUs, which have been stored in the transmission buffer and have new HFNs.

As described above, according to the first embodiment of the present invention, when a deciphering has failed, packets stored in both the transmission buffer of the transmitting-side RLC entity and the reception buffer of the receiving-side RLC entity are regarded as useless data at the corresponding time point. When a packet pre-stored in the transmission buffer of the transmitting-side RLC entity is transmitted through a radio channel, it may cause an inefficient use of limited radio resources, as well as a waste of transmission resources.

Therefore, according to the first embodiment of the present invention, when the receiving-side PDCP entity senses that deciphering has failed, the receiving-side PDCP entity notifies the transmitting-side PDCP entity of a PDCP RESET so that the transmitting-side PDCP can stop transmitting packets stored in the transmitting buffer, discard the stored packets, set a new HFN, cipher data by using the newly set HFN, and transmit the ciphered data, i.e., according to the first embodiment of the present invention, it is possible to prevent a packet from being transmitted before the PDCP RESET, without synchronization between ciphering and deciphering.

### Second Embodiment

The second embodiment of the present invention is substantially similar to the first embodiment of the present invention, except that a PDCP RESET message is contained in a specific control RLC packet, and that a transmitting-side RLC entity having received the specific control RLC packet automatically stops transmitting packets from the RLC layer. Hereinafter, the control RLC packet will be referred to as an RLC STOP message.

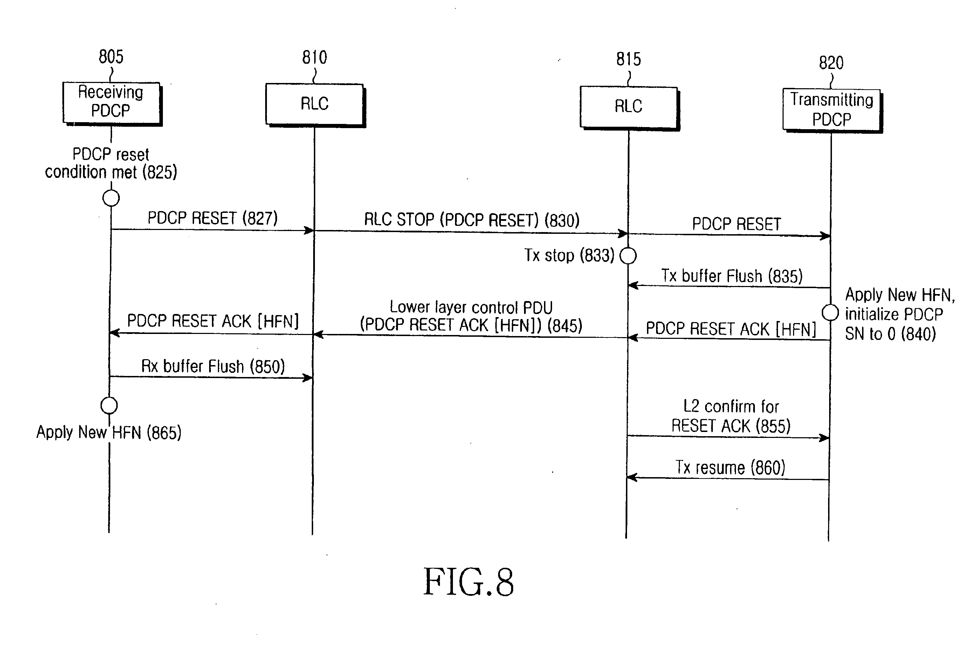

FIG. 8 is a view illustrating the entire operations of a transmitting apparatus and a receiving apparatus according to the second embodiment of the present invention. Here, FIG. 8 illustrates a mobile communication system including a transmitting apparatus and a receiving apparatus, wherein the receiving apparatus contains a receiving-side PDCP entity 805 and a receiving-side RLC entity 810, and the transmitting apparatus contains a transmitting-side RLC entity 815 and a transmitting-side PDCP entity 820.

In step 825, the receiving-side PDCP entity 805 performs an ROHC header decompression operation with respect to a received packet, and senses that phenomena which should not occur during the ROHC header decompression process, i.e., phenomena regarded as a deciphering failure, have occurred a predetermined number N times or more. Accordingly, in step 827, the receiving-side PDCP entity 805 determines a PDCP RESET to be performed, and creates and transfers a PDCP RESET packet to the receiving-side RLC entity 810.

In step 830, when receiving a PDCP RESET packet, the receiving-side RLC entity 810 inserts the PDCP RESET packet into an RLC STOP message, and transmits the RLC STOP message to the transmitting-side RLC entity 815. The RLC STOP message corresponds to a control message transmitted/received between RLC layers. When receiving the RLC STOP message, the transmitting-side RLC entity 815 temporarily stops transmitting packets. In addition, the transmitting-side RLC entity 815 transfers the PDCP RESET packet included in the RLC STOP message to the transmitting-side PDCP entity 820. In step 833, the transmitting-side RLC entity 815 stops the transmission operation although storing data to be transmitted in an RLC transmission buffer, and such a state is maintained until it receives a transmission resumption instruction from the transmitting-side PDCP entity 820, which is an upper layer.

In step 835, when receiving the PDCP RESET message, the transmitting-side PDCP entity 820 instructs the transmitting-side RLC entity 815 to discard RLC PDUs stored in the RLC transmission buffer (Tx buffer Flush instruction). In addition, in step 840, the transmitting-side PDCP entity 820 initializes a PDCP SN to "0," and determines a new HFN value. Here, discarding RLC PDUs stored in the RLC transmission buffer and resetting the PDCP SN may be performed according to the reverse sequence. In step 845, the transmitting-side PDCP entity 820 inserts the newly determined HFN value into a PDCP RESET ACK message, and transfers the PDCP RESET ACK message to the transmitting-side RLC entity 815, which is a lower layer.

In this case, while transferring the PDCP RESET ACK message to the transmitting-side RLC entity 815, the transmitting-side PDCP entity 820 requests the transmitting-side RLC entity 815 to report whether or not the PDCP RESET ACK message has been successfully transmitted. Then, the transmitting-side PDCP entity 820 ciphers packets received after step 835 by applying the new HFN and PDCP SN, and transmits the ciphered packets to the transmitting-side RLC entity 815. In this case, since the transmitting-side RLC entity 815 is in a state in which the transmission operation thereof has been stopped in step 835, the transmitting-side RLC entity 815 does not transmit and temporarily stores PDCP PDUs received from the transmitting-side PDCP entity 820 in the RLC transmission buffer.

In step 845, the transmitting-side RLC entity 815 transmits the PDCP RESET ACK message including the newly determined HFN value to the receiving-side RLC entity 810 through a control message. The receiving-side RLC entity 810 transfers the newly determined HFN value included in the RLC control message to the receiving-side PDCP entity 805.

In step 850, the receiving-side PDCP entity 805 instructs the receiving-side RLC entity 810 to discard packets stored in a reception buffer. This is because the PDCP PDUs stored in the reception buffer, which have been received before the PDCP RESET process is performed, become useless due to application of the new HFN. Thereafter, in step 865, the receiving-side PDCP entity 805 performs a deciphering operation with respect to subsequently-received packets by applying the newly set HFN.

Meanwhile, when confirming that the control message including the PDCP RESET ACK message has been successfully transmitted to the receiving-side RLC entity 810, the transmitting-side RLC entity 815 notifies the transmitting-side PDCP entity 820 of the transmission success in step 855. In step 860, the transmitting-side PDCP entity 820 instructs the transmitting-side RLC entity 815 to resume transmission. Then, the transmitting-side RLC entity 815 resumes transmission of PDCP PDUs to which the new HFN has been applied.

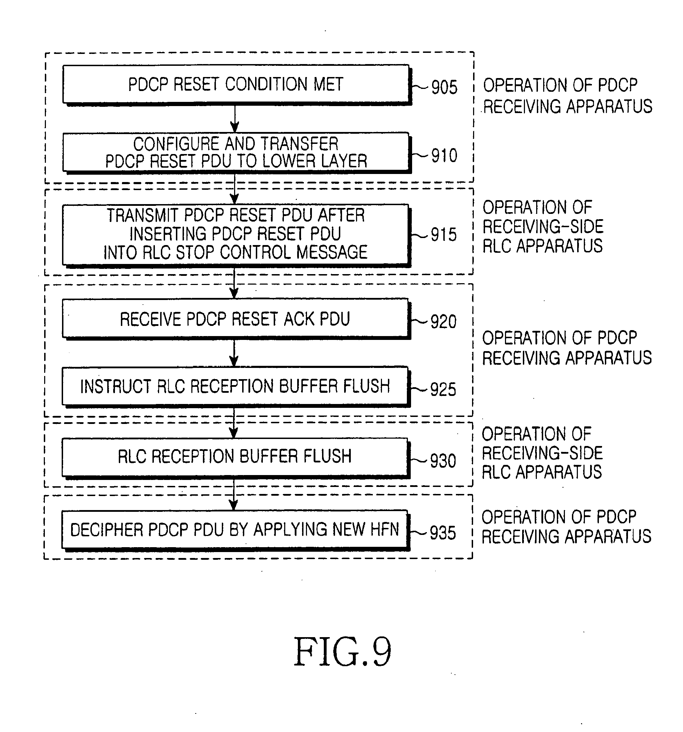

FIG. 9 is a view illustrating the packet processing operation of the receiving apparatus according to the second embodiment of the present invention.

In step 905, a PDCP entity senses that a PDCP RESET execution condition has been met. Here, the "sensing the PDCP RESET execution condition" represents that the receiving-side PDCP entity senses a deciphering failure. For example, when phenomena that should not occur during an ROHC header decompression process occur a predetermined number N times, the receiving-side PDCP entity determines that deciphering has failed.

In step 910, the PDCP entity creates and transfers a PDCP RESET PDU to the RLC entity, which is a lower layer. The PDCP RESET packet includes type information representing that the PDCP PDU received from the PDCP entity is a PDCP RESET PDU.

In step 915, the RLC entity inserts the PDCP RESET PDU into an RLC STOP control message, and transmits the RLC STOP control message to a transmitting-side RLC entity.

Thereafter, in step 920, the receiving-side PDCP entity receives a PDCP RESET ACK PDU from the transmitting apparatus. Accordingly, through the PDCP RESET ACK PDU, the PDCP entity recognizes that the transmitting apparatus has completed a PDCP RESET with respect to previous packets, and identifies that a new HFN value has been determined.

In step 925, the PDCP entity instructs the RLC entity to discard packets which have been previously received and stored in a reception buffer. In step 930, the RLC entity discards packets stored in the reception buffer for a corresponding service according to the instruction of the PDCP entity.

In step 935, the PDCP entity deciphers PDCP PDUs received after the PDCP RESET, by using the newly set HFN.

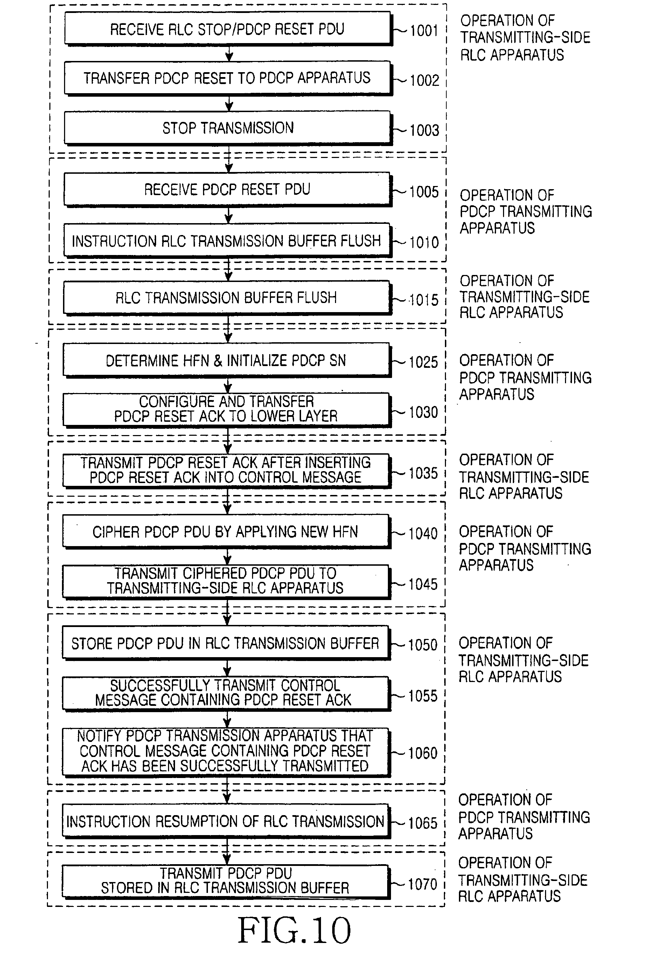

FIG. 10 is a view illustrating the packet processing operation of the transmitting apparatus according to the second embodiment of the present invention.

In step 1001, the transmitting-side RLC entity receives an RLC STOP control message including a PDCP RESET PDU from the receiving-side RLC entity. In step 1002, the transmitting-side RLC entity identifies the PDCP RESET PDU of the RLC STOP control message, and transfers the PDCP RESET PDU to the transmitting-side PDCP entity. In step 1003, according to the RLC STOP control message, the transmitting-side RLC entity temporarily stops transmitting PDCP PDUs that have already arrived at a transmission buffer. That is, although data to be transmitted has been stored in the transmission buffer, the transmitting-side RLC entity stops transmitting packets until it receives a transmission resumption instruction from the PDCP entity, which is a higher layer. Also, the transmitting-side RLC entity may instruct the transmission buffer to stop transmitting PDCP PDUs, as soon as it receives the RLC STOP control message.

When the PDCP entity receives a PDCP RESET PDU in step 1005, the PDCP entity instructs the transmitting-side RLC entity to discard packets stored in a corresponding transmission buffer in step 1010. Then, in step 1015, the transmitting-side RLC entity discards packets stored in the transmission buffer according to the packet discard instruction of the PDCP entity.

In step 1025, the PDCP entity completes the PDCP RESET by resetting a PDCP SN to "0" according to the PDCP RESET PDU, and determines an HFN to be newly used. For example, the HFN may be determined as a value one higher than the value of the previous HFN. In step 1030, the PDCP entity inserts the newly determined HFN into a PDCP RESET ACK message, and transfers the PDCP RESET ACK message to the RLC entity, which is a lower layer. In this case, the PDCP entity instructs the RLC entity to report whether or not the PDCP RESET ACK message has been successfully transmitted.

In step 1035, the transmitting-side RLC entity, which has received the PDCP RESET ACK message, inserts the PDCP RESET ACK message into a control message, and transmits the control message to the receiving-side RLC entity. Thereafter, the PDCP entity ciphers PDCP PDUs by using the newly determined HFN in step 1040, and transfers the ciphered PDCP PDUs to the RLC entity in step 1045. In step 1050, the RLC entity does not directly transmit received PDCP PDUs, and first stores the received PDCP PDUs in the transmission buffer. Then, when the RLC entity is notified that the receiving apparatus has successfully received the control message including the PDCP RESET ACK message, from the receiving apparatus in step 1055, the RLC entity notifies the PDCP entity of the transmission success in step 1060.

In step 1065, the PDCP entity, which has recognized that PDCP RESET ACK message has been successfully transmitted, instructs the RLC entity to start transmitting PDCP PDUs. In step 1070, the transmitting-side RLC entity resumes transmission of PDCP PDUs stored in the transmission buffer.

### Third Embodiment

The first and second embodiments of the present invention refer to a method of discarding all PDCP PDUs generated until the time point at which deciphering has failed. However, such a method may cause deterioration of service quality. For this reason, according to the third embodiment of the present invention, there is provided a method in which a PDCP reception entity re-establishes synchronization by itself when a deciphering failure has occurred due to HFN desynchronization, thereby solving the deciphering failure, and preventing unnecessary loss of packets.

Therefore, according to the third embodiment of the present invention, when a receiving-side PDCP entity senses that a deciphering failure has occurred, the receiving-side PDCP entity determines that the deciphering failure is caused by HFN desynchronization and attempts to re-establish HFN synchronization. In addition, according to the third embodiment of the present invention, if the HFN synchronization establishment has failed, the receiving-side PDCP entity notifies a Radio Resource Control (RRC) entity of the failure, and performs a PDCP re-establishment process, thereby solving the problem of the HFN deciphering failure.

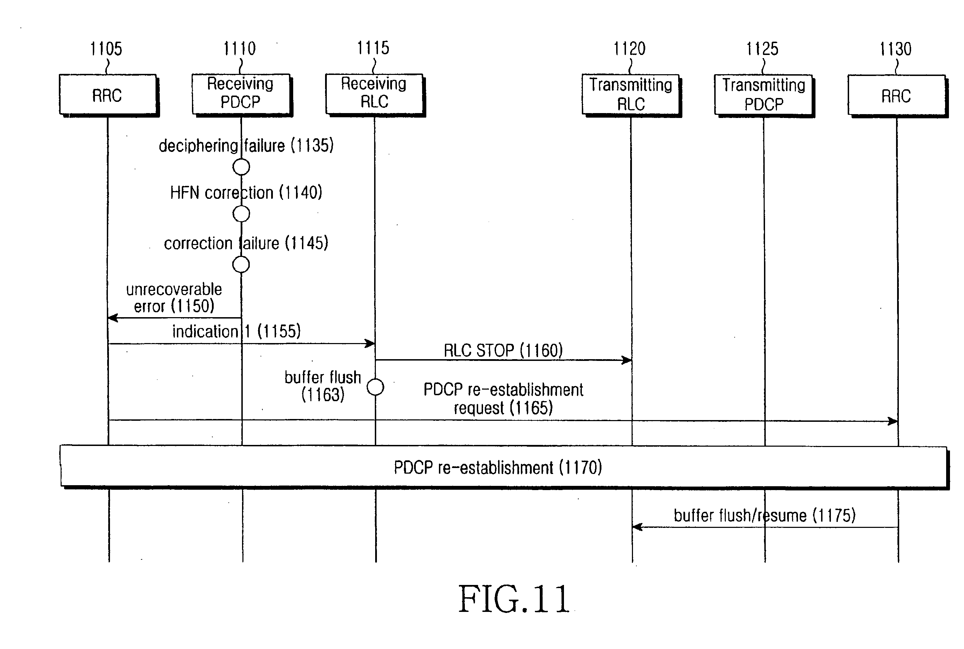

FIG. 11 is a flowchart illustrating the entire signal flow between a transmitting apparatus and a receiving apparatus according to the third embodiment of the present invention.

The third embodiment of the present invention will be described with respect to a mobile communication system including a receiving apparatus and a transmitting apparatus, wherein the receiving apparatus includes an RRC entity 1105, a PDCP entity 1110, and an RLC entity 1115, and the transmitting apparatus includes an RLC entity 1120, a PDCP entity 1125, and an RRC entity 1130, as an example. Here, the RRC entity is a device for controlling the configuration of the PDCP entity, PDCP re-establishment, etc.

In step 1135, the receiving-side PDCP entity 1110 determines that a deciphering failure has occurred after performing an ROHC header decompression operation with respect to a received packet. In step 1140, the PDCP entity 1110 attempts an HFN correction. Here, the HFN is a value updatable by a ciphering unit itself and a deciphering unit itself.

HFN desynchronization may occur in two cases as described below:
1. A case where when a PDCP SN has a size of k bits, 2^{k} number of packets are continuously lost
2. A case where an error occurs in a PDCP SN

Hereinafter, an HFN used in the transmitting-side PDCP entity will be referred to as an "HFN_used," and an HFN used in the receiving-side PDCP entity will be referred to as an "HFN_assumed."

The first case may be defined as a case where the HFN_assumed is still maintained at "x," although the HFN_used is updated to "x+1." In this case, the receiving-side PDCP entity increases the value of the HFN_assumed by one by itself so as to use the same HFN as that used in the transmitting-side PDCP entity, thereby solving the HFN desynchronization problem.

Meanwhile, in the second case where an error occurs in a PDCP SN, if HFN desynchronization occurs because the HFN_used is "x" but the HFN_assumed is updated to "x+1," the PDCP SN and HFN may be described with reference to changing situations as shown in Table 3, as an example.

**Table 3**

| | | | | |
|---|---|---|---|---|
| PDCP SN transmitted | 10 | 11 | 12 | 13 |
| HFN_used | x | x | x | x |
| PDCP SN received | 10 | 11 | 12 | 13 |
| HFN_assumed | x | x | x+1 | x+1 |
| HFN desynchronization | No | No | Yes | Yes |

If the receiving-side PDCP entity misrecognizes the transmitted PDCP SN "12" as PDCP SN "7," the receiving-side PDCP entity determines that all PDCP PDUs located between PDCP SN "13" and PDCP SN "6" have been lost, and increases the HFN by one.

Here, the reason why PDCP SN "7" is received after PDCP SN "7" has been received is that the error occurs not due to a loss of a large number of PDCP PDUs, but due to an error in a PDCP SN. For this reason, the HFN_used has been set as "x," and HFN desynchronization occurs between a ciphering unit of the transmitting apparatus and a deciphering unit of the receiving apparatus.

In this case, the HFN desynchronization due to an error in the PDCP SN can be solved in such a manner that the receiving-side PDCP entity decreases the value of the HFN_assumed by one. As described above, the HFN desynchronization problem can be solved in such a manner that the receiving-side PDCP entity increases or decreases the value of the HFN_assumed by one.

Therefore, the receiving-side PDCP entity checks cases as described in Table 4, and performs an HFN correction operation.

**Table 4**

| | |
|---|---|
| | When a phenomenon that should not occur during the normal ROHC header decompression process has continuously occurred a predetermined number N times, it is determined that deciphering has failed. |
| | PDCP PDUs received after a deciphering failure are deciphered by using "HFN_assumed - 1" or "HFN_assumed + 1" instead of "HFN_assumed." |
| | When deciphering has been successfully achieved a predetermined number M of times by using either "HFN_assumed - 1" or "HFN_assumed + 1," that is, a phenomenon that should not occur during the normal ROHC header decompression process has not occurred the predetermined number M of times, the receiving-side PDCP entity updates the HFN_assumed and performs the original deciphering operation. |

When the receiving-side PDCP entity senses that a deciphering failure has continuously occurred in step 1145 although having performed the HFN correction operation in step 1140, the receiving-side PDCP entity notifies the receiving-side RRC entity of the continuous deciphering failure in step 1150. That is, the PDCP entity notifies the RRC entity, which controls PDCP establishment, that an unrecoverable error has occurred.

In step 1155, the receiving-side RRC entity transmits an indicator representing an error occurrence to the receiving-side RLC entity.

Meanwhile, the receiving-side RLC entity, which has received the error occurrence indicator from the RRC entity in step 1155, transmits an RLC control message of requesting data transmission to be stopped to the transmitting-side RLC entity in step 1160, and discards packets stored in a reception buffer in step 1163.

In step 1165, the receiving-side RRC entity 1105 transmits a message informing that PDCP re-establishment is required to the transmitting-side RRC entity 1130 in order to perform PDCP re-establishment.

In step 1170, a PDCP re-establishment process is performed based on the general RRC procedure, so that the transmitting-side PDCP entity and the receiving-side PDCP entity are newly configured. After the PDCP re-establishment has been completed, the transmitting-side RRC entity instructs the transmitting-side RLC entity to discard packets pre-stored in a transmission buffer in step 1175. In addition, packets newly-configured based on the re-established PDCP start to be transmitted.

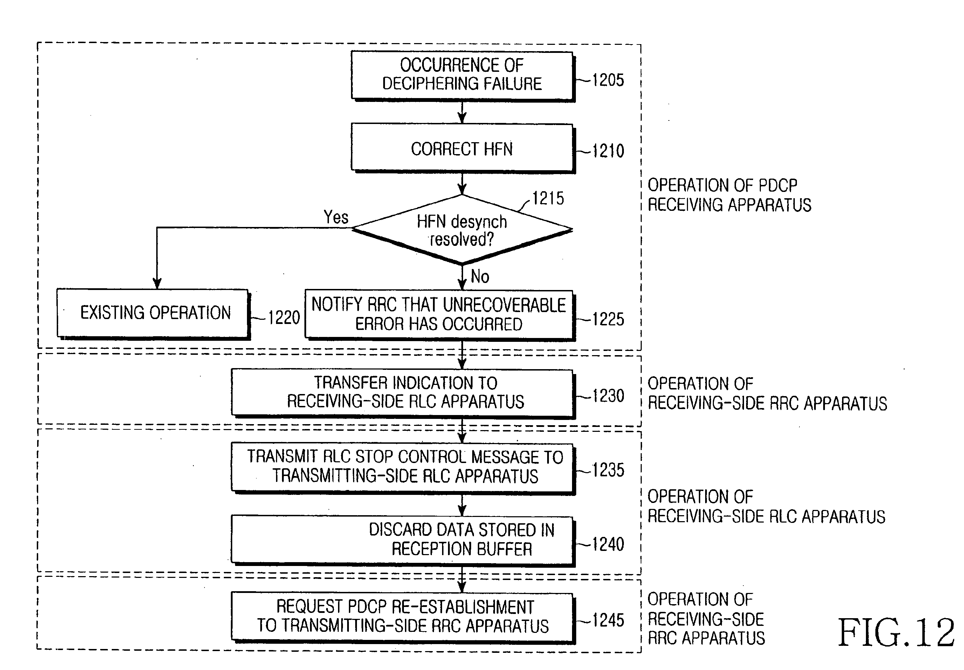

FIG. 12 is a view illustrating the packet processing operation of the receiving apparatus according to the third embodiment of the present invention, wherein the receiving apparatus includes a PDCP entity, an RLC entity, and an RRC entity for controlling re-establishment of the PDCP packet.

In step 1205, in connection with deciphering of a received packet, the PDCP entity senses that a deciphering failure has occurred. In step 1210, in connection with the deciphering of the received packet, an HFN correction is attempted. That is, a value obtained by increasing or decreasing an HFN by one is defined as a new HFN, and received packets are deciphered by using the newly defined HFN.

When it is determined in step 1215 that a deciphering failure has not occurred a predetermined number M of times, as a result of deciphering using any one of the newly defined HFNs, the PDCP entity proceeds to step 1120, performing an existing operation.

In contrast, when it is determined in step 1215 that a deciphering failure has continuously occurred although the newly defined HFNs are used, the PDCP entity proceeds to step 1225 of notifying the receiving-side RRC entity that an unrecoverable error has occurred.

Thereafter, in step 1230, the receiving-side RRC entity transfers indicator #1 representing that an unrecoverable error has occurred in the PDCP entity, to the receiving-side RLC entity.

In step 1235, the receiving-side RLC entity transmits indicator #1, which represents that an unrecoverable error has occurred, to the transmitting-side RLC entity. The indicator #1 representing that an error has occurred is transmitted, together with an RLC STOP control message. In step 1240, when confirming that the control message has been transmitted, the receiving-side RLC entity discards packets stored in the reception buffer.

Meanwhile, in step 1245, the receiving-side RRC entity transmits an RRC message of requesting a PDCP re-establishment in order to be synchronized with the transmitting-side RRC entity.

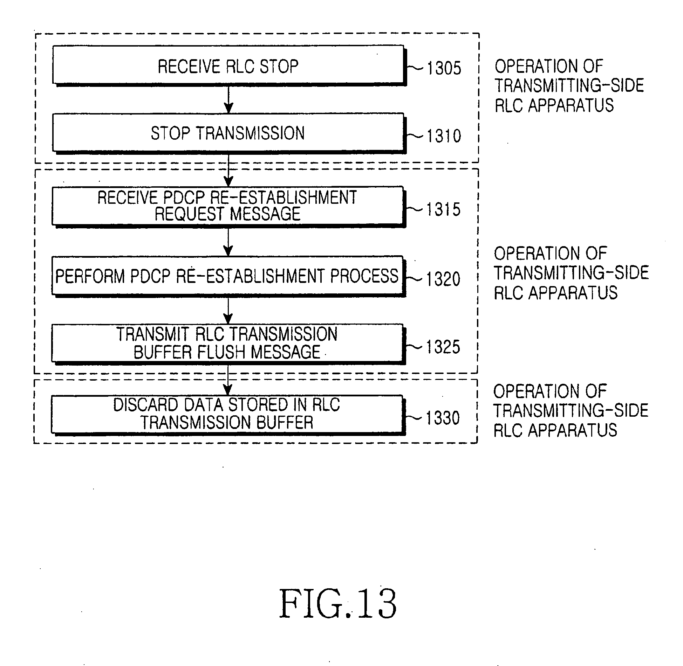

FIG. 13 is a view illustrating the packet processing operation of the transmitting apparatus according to the third embodiment of the present invention.

In step 1305, the transmitting-side RLC entity receives an RLC STOP control message from the receiving-side RLC entity. Thereafter, in step 1310, the transmitting-side RLC entity stops transmitting packets stored in a transmission buffer.

The transmitting-side RRC entity receives a PDCP re-establishment request message from the receiving-side RRC entity in step 1315, and proceeds to step 1320 of performing a PDCP re-establishment process. Then, the transmitting-side RRC entity proceeds to step 1325 of transferring a transmission buffer flush instruction to the transmitting-side RLC entity. In step 1330, the transmitting-side RLC entity discards the packets stored in the RLC transmission buffer according to the transmission buffer flush instruction. Thereafter, transmission/reception of PDCP PDUs is resumed based on the re- established PDCP.

### Fourth Embodiment

As described above, the PDCP RESET according to the first to third embodiments of the present invention is accompanied with discarding of a large number of packets stored in RLC transmission/reception buffers. Such an operation may disturb the general RLC operation. Therefore, the fourth embodiment of the present invention proposes a method of performing an RLC RESET, together with a PDCP RESET, when a PDCP RESET execution condition has been met. In addition, according to the fourth embodiment of the present invention, there is a method in which an entity triggering a PDCP RESET informs a counterpart PDCP entity of the serial number of a PDCP SDU received without error, thereby minimizing loss of packets which may occur upon the PDCP RESET.

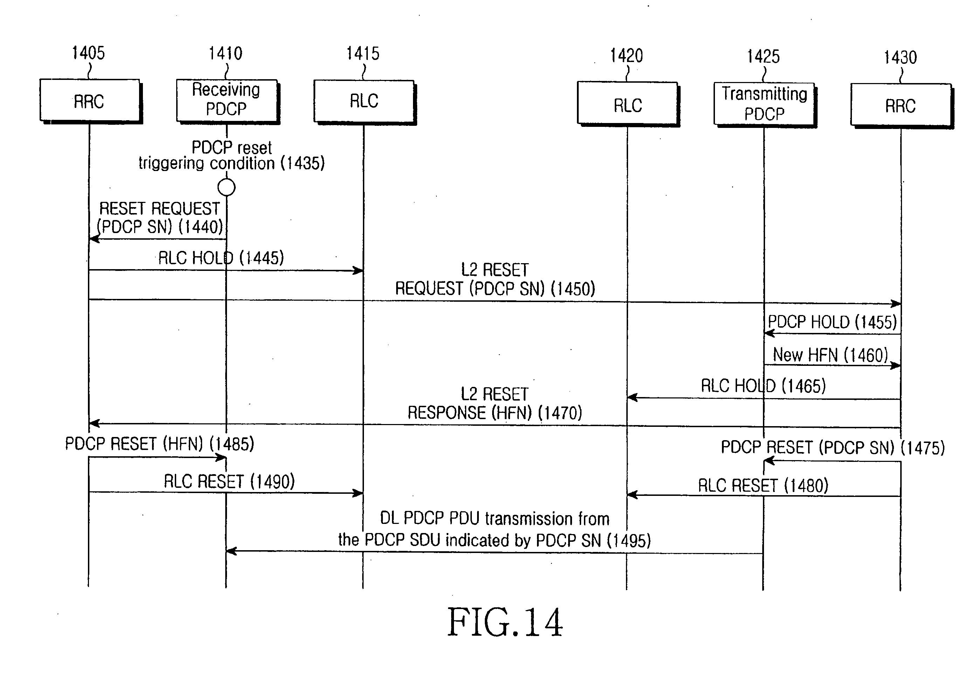

FIG. 14 is a view illustrating the flow of the entire signals for triggering a PDCP RESET according to the fourth embodiment of the present invention.

The fourth embodiment of the present invention will be described with a mobile communication system containing a receiving apparatus and a transmitting apparatus, wherein the receiving apparatus includes an RRC entity 1405, a PDCP entity 1410, and an RLC entity 1415, and the transmitting apparatus includes an RLC entity 1420, a PDCP entity 1425, and an RRC entity 1430, as an example.

Meanwhile, a communication device in the mobile communication system according to the present invention includes all access devices, such as a terminal, a portable telephone, a personal digital assistant, a portable computer, etc., which are mobile and can communicate with a specific communication network. In addition, the communication device includes all electronic communication devices which communicate with a specific node in a network supporting a specific service. Hereinafter, the communication device will be inclusively referred to as a User Equipment (UE). Therefore, entities shown as a transmitting apparatus or receiving apparatus in FIG. 14 may be a UE or node B of a system managing the UE.

That is, in the case of supporting a downlink service, a system device may be the transmitting apparatus, and a communication device may be the receiving apparatus. In contrast, in the case of supporting an uplink service, a communication device may be the transmitting apparatus, and a system device may be the receiving apparatus. In other words, each of the communication and system device may be used as either the transmitting apparatus or as receiving apparatus according to service.

When the PDCP entity 1410 senses that a phenomenon that should not occur during the normal ROHC header decompression process has occurred a predetermined number N times in step 1435, the PDCP entity 1410 notifies the RRC entity 1405 that a PDCP RESET is required in step 1440. In this case, the PDCP entity 1410 informs the RRC entity 1405 of a value one higher than the highest serial number among serial numbers of normally received PDCP PDUs, together with the notification. The normally received PDCP PDUs represent PDCP PDUs received before a phenomenon that should not occur during the normal ROHC header decompression process occurs.

Hereinafter, the value one higher than the highest serial number among serial numbers of normally received PDCP PDUs will be referred to as a "highest normal PDCP SN." Meanwhile, for simplicity of implementation, the highest normal PDCP SN may be replaced by a value obtained by subtracting a predetermined value "N" from the highest serial number among serial numbers of PDCP PDUs received until a PDCP RESET is triggered.

In addition, requiring a PDCP RESET in the receiving-side PDCP entity 1410 means that data communication is not normally performed. Therefore, the RRC entity 1405 instructs the RLC entity 1415 to stop the operation thereof in step 1445, and transmits an L2 RESET REQUEST message to a counterpart, that is, to the transmitting-side RRC entity 1430 in step 1450. The highest normal PDCP SN is inserted into the L2 RESET REQUEST message and is transmitted.

When receiving the L2 RESET REQUEST message, the transmitting-side RRC entity 1430 instructs the transmitting-side PDCP entity 1425 to stop transmitting PDCP PDUs in step 1455 on account of the fact that a PDCP RESET process will be performed. Thus, the transmitting-side PDCP entity 1425 stops transmitting PDCP PDUs, and determines and reports a new HFN, which will be used after the PDCP RESET process, to the RRC entity 1430 in step 1460. The new HFN may be determined, for example, as a value obtained by increasing an HFN which is currently in use by one. Also, the new HFN may be determined by other schemes. In step 1465, the RRC entity 1430 instructs the RLC entity 1420 to stop a packet transmission operation.

After stopping the operations of the transmitting-side PDCP entity 1425 and transmitting-side RLC entity 1420, and acquiring the new HFN to be used after the PDCP RESET process in steps 1425 and 1430, the transmitting-side RRC entity 1430 transmits an L2 RESET RESPONSE message to a counterpart, that is, to the receiving-side RRC entity 1405, in step 1470. The new HFN to be used after the PDCP RESET process is inserted into the L2 RESET RESPONSE message and is transmitted.

In step 1475, when confirming that the L2 RESET RESPONSE message has been successfully transmitted, the transmitting-side RRC entity 1430 instructs the PDCP entity 1425 to perform the PDCP RESET process. In this case, the RRC entity 1430 notifies the PDCP entity 1425 of the highest normal PDCP SN, together with the instruction. Accordingly, the PDCP entity 1425 updates the HFN with the new HFN, and initializes the PDCP SN to a predetermined value, e.g., to zero. Various values differently defined depending on the design of system operators may be used as the reset value.

In addition, the PDCP entity 1425 re-establishes a header compressor, and start transmitting stored PDCP SDUs, starting with a predetermined PDCP SDU. In this case, the newly transmitted PDCP SDUs are transmitted after being ciphered by means of the newly-defined HFN.

The PDCP entity 1425 includes a PDCP SDU buffer for storing IP packets which are in a state in which ciphering and header compression is not yet performed. After the IP packet has been subjected to header compression and ciphering, the IP packet is given a PDCP SN, thereby finally becoming a PDCP PDU. Therefore, the PDCP SDU and the PDCP PDU have a one-to-one correspondence between each other, and a PDCP SN indicates not only a PDCP PDU but also a PDCP SDU. Similarly, the highest normal PDCP SN primarily indicates a specific PDCP PDU, and also indicates a PDCP SDU corresponding to the specific PDCP PDU.

Therefore, after transferring a PDCP PDU to the RLC entity 1420, the PDCP entity 1425 stores a PDCP SDU corresponding to the PDCP PDU in the PDCP SDU buffer until the PDCP entity 1425 is notified that the PDCP PDU has been successfully transmitted.

In addition, when the PDCP entity 1425 is notified that the PDCP PDU has been successfully transmitted from the RLC entity 1420, the PDCP entity 1425 discards the PDCP SDU corresponding to the PDCP PDU from the PDCP SDU buffer. Therefore, PDCP SDUs stored in the PDCP SDU buffer are SDUs which are not confirmed whether or not corresponding PDCP PDUs have been successfully transmitted from the RLC entity 1420. Meanwhile, the highest normal PDCP SN is a value one higher than the highest serial number among serial numbers of PDCP PDUs determined to have been normally received by a receiving side.

In other words, when a PDCP SDU has a serial number lower than the highest normal PDCP SN, it means that the PDCP SDU has already been successfully received by the receiving-side PDCP entity 1410. Accordingly, in step 1495, the transmitting-side RLC entity 1420 performs a PDCP RESET process, and then starts transmitting PDCP SDUs, starting with a PDCP SDU corresponding to the highest normal PDCP SN.

Meanwhile, when the L2 RESET RESPONSE message has been successfully transmitted in step 1470, the RRC entity 1430 instructs the RLC entity 1420 to perform an RLC RESET in step 1480. Accordingly, the RLC entity 1420 initializes a variety of parameters, e.g., a parameter for managing an RLC serial number, a parameter connected with an RLC retransmission, etc., and initializes a variety of timers and the like. In addition, the RLC entity 1420 discards RLC PDUs stored in a transmission buffer.

Meanwhile, in the receiving side, the receiving-side RRC entity 1405 having successfully received the L2 RESET RESPONSE message instructs the receiving-side PDCP entity 1410 to perform a PDCP RESET. In this case, the RRC entity 1405 notifies the PDCP entity 1410 of a new HFN to be used after the reset operation, together with the instruction. When receiving the PDCP RESET instruction, the PDCP entity 1410 updates an HFN with the new HFN, and re-establishes a header decompressor. In addition, the PDCP entity 1410 initializes a variety of parameters.

In step 1490, the receiving-side RRC entity 1405 instructs the RLC entity 1415 to be reset. Accordingly, the RLC entity 1415 initializes a variety of parameters, e.g., a parameter for managing an RLC serial number, a parameter connected with an RLC retransmission, etc., and initializes a variety of timers and the like, while discarding RLC PDUs stored in a reception buffer.

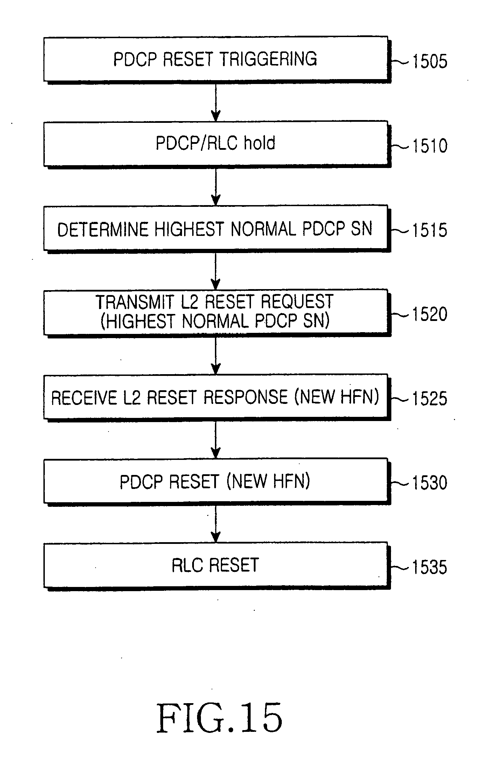

FIG. 15 is a view illustrating the operation of a receiving apparatus according to the fourth embodiment of the present invention. Here, the fourth embodiment of the present invention will be described with a receiving apparatus including an RRC entity, a PDCP entity, and an RLC entity, as an example.

In step 1505, the PDCP entity recognizes that a PDCP RESET is required. The PDCP entity senses that phenomena regarded as a deciphering failure during an ROHC header decompression process for received packets have occurred at least N times among predetermined M times. Accordingly, the PDCP entity determines that a PDCP RESET is required.

In step 1510, the PDCP entity notifies the RRC entity that a PDCP RESET is required, and the RRC entity stops the packet reception operation of the RLC entity after recognizing that a PDCP RESET is required. The PDCP entity and RLC entity do not process and discard subsequently-received RLC PDUs and PDCP PDUs. In step 1515, the PDCP entity identifies the highest normal PDCP SN which is a value one higher than the highest serial number among serial numbers of normally received PDCP PDUs. The highest normal PDCP SN is inserted into an L2 RESET REQUEST message and a transmitting-side PDCP entity in the future is informed of the highest normal PDCP SN. Meanwhile, when it is impossible to determine the highest normal PDCP SN, information about the highest normal PDCP SN may be not included in the L2 RESET REQUEST message.

In step 1520, the RRC entity creates and transmits an L2 RESET REQUEST message to the transmitting apparatus. The L2 RESET REQUEST message may be transmitted, after including an identified highest normal PDCP SN.

When receiving an L2 RESET RESPONSE message in response to the L2 RESET REQUEST message from the transmitting apparatus in step 1525, the RRC entity 1430 requests the PDCP entity to be reset in step 1530. According to the PDCP reset request, the PDCP entity initializes a variety of parameters/timers and the like connected with PDCP establishment, and initializes a header decompressor and a deciphering unit. Then, a value received through the L2 RESET RESPONSE message is set as an HFN to be used in the PDCP entity after the PDCP RESET.

In step 1535, the RRC entity requests the RLC entity to perform an RLC RESET, and then stops. Here, the RLC RESET represents an operation of resetting a variety of parameters/timers and the like connected with the RLC entity, and of discarding RLC PDUs stored in the reception buffer.

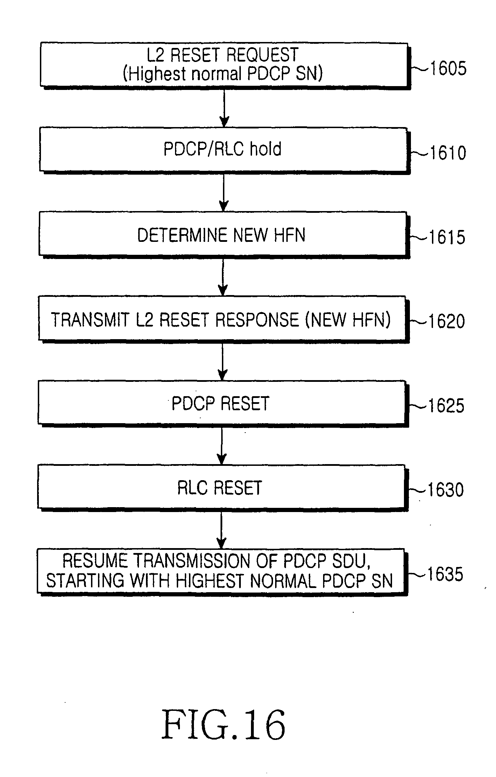

FIG. 16 is a view illustrating the operation of a transmitting apparatus according to the fourth embodiment of the present invention.

In step 1605, the RRC entity receives an L2 RESET REQUEST message from a receiving apparatus. The L2 RESET REQUEST message may include information which indicates the serial number of a PDCP PDU normally-received without error by the receiving apparatus. That is, according to the fourth embodiment of the present invention, the L2 RESET REQUEST message may be transmitted with a highest normal PDCP SN inserted into it. Therefore, when identifying the highest normal PDCP SN, the RRC entity can indicate a PDCP SDU having the serial number among PDCP SDUs stored in a PDCP SDU buffer.

In step 1610, the RRC entity stops the PDCP PDU transmission of the PDCP entity and the RLC PDU transmission of the RLC entity.

In step 1615, the RRC entity determines a new HFN to be applied after a PDCP RESET. The new HFN may be, for example, a value one higher than an HFN which is currently in use. In step 1620, the RRC entity creates and transmits an L2 RESET RESPONSE message to the receiving apparatus. The L2 RESET RESPONSE message includes the new HFN to be applied after the PDCP RESET.

When confirming that the L2 RESET RESPONSE message has been successfully transmitted, the transmitting apparatus resets the PDCP entity and RLC entity. The PDCP RESET and the RLC RESET may be performed at the same time or may be performed one after another. In step 1625, the RRC entity requests the PDCP entity to be reset. Here, the PDCP RESET represents an operation of resetting a variety of parameters/timers and the like connected with the PDCP entity, and of resetting a header compressor and a ciphering unit. When ciphering PDCP PDUs after the RESET, the PDCP entity uses the new HFN determined in step 1615. In addition, the PDCP entity does not discard SDUs stored in the PDCP SDU buffer while performing the PDCP RESET.

In step 1630, an RLC RESET is requested. Here, the RLC RESET represents an operation of resetting a variety of parameters/timers and the like connected with the RLC entity, and of discarding RLC PDUs stored in the transmission buffer.

When completing the above process, the PDCP entity resumes the transmission of PDCP SDUs in step 1635. In this case, if the highest normal PDCP SN has been received in step 1605, the PDCP entity resumes the transmission, starting with a PDCP SDU corresponding to the serial number. In contrast, the highest normal PDCP SN has not been received in step 1605, the transmitting apparatus resumes the transmission, starting with the first RLC SDU among SDUs stored in the PDCP SDU buffer.

### Fifth Embodiment

The first embodiment of the present invention provides the method for transmitting PDCP control information, such as a PDCP RESET, by using an RLC control PDU, instead of an RLC data PDU. When PDCP control information is transmitted by an RLC control PDU, there is an advantage in that it is possible to prevent a delay due to in-sequence delivery. The "in-sequence delivery" represents a function that an RLC entity delivers RLC SDUs (i.e. PDCP PDUs) to a PDCP entity in the order that the RLC entity has transmitted the RLC SDUs. Meanwhile, there are various types of PDCP control information, in which some PDCP control information must be delivered in the order that PDCP data PDUs have been transmitted. In other words, some PDCP control information must be transmitted to a PDCP receiving apparatus in the in-sequence delivery scheme. Therefore, the fifth embodiment of the present invention provides a method and apparatus for separately processing PDCP control information, such as a PDCP RESET, that does not necessitate in-sequence delivery and PDCP control information requiring in-sequence delivery.

First, Table 5 shows the definition of PDCP control information.

**Table 5**

| | |
|---|---|
| PDCP RESET, PDCP RESET ACK | Control information for instructing a PDCP RESET or reporting that a PDCP RESET has been completed. It is preferred that the information is delivered to a counterpart device as soon as possible. |
| PDCP STATUS REPORT | Control information for reporting the serial number of a lost PDCP PDU from a receiving-side PDCP entity to a transmitting-side PDCP entity in order to prevent data loss which may occur upon a handover or the like. It is preferred that the information is delivered to a counterpart device as soon as possible. |
| ROHC FEEDBACK | Feedback information transmitted from a header decompressor to a header compressor during an ROHC operation. For example, the feedback information includes an acknowledgement signal and a non-acknowledgement signal for an ROHC packet of a specific serial number. Such feedback information must not arrive at the header compressor ahead of a previously-transmitted ROHC packet. In other words, the feedback information must be transmitted by in-sequence delivery. |

That is, according to the fifth embodiment of the present invention, a PDCP entity inserts PDCP control information, e.g., a PDCP RESET, a PDCP RESET ACK, etc., not requiring in-sequence delivery into an RLC control PDU, and transmits the PDCP control information, thereby preventing a delay due to in-sequence delivery.

In contrast, the PDCP entity inserts PDCP control information, e.g., PDCP control information including an ROHC feedback information, requiring in-sequence delivery into an RLC data PDU, and transmits the PDCP control information, thereby ensuring the in-sequence delivery.

Here, attention must be paid to the fact that the transmission reliability of an RLC control PDU may be lower than that of an RLC data PDU. This is because an ARQ is applied to the RLC data PDU, but an ARQ is not applied to the RLC control PDU. Therefore, it may be further preferred that either information which must be rapidly transmitted or a control message requiring a high reliability is transmitted through an RLC data PDU, instead of an RLC control PDU.

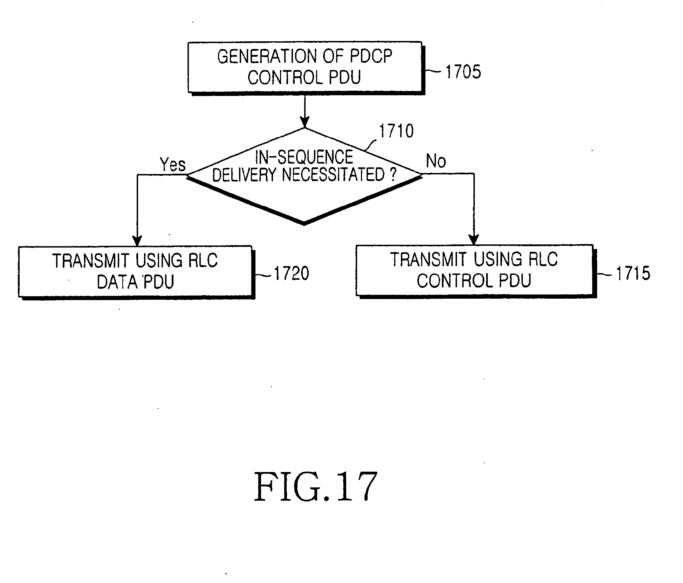

FIG. 17 is a view illustrating the operation of a transmitting apparatus according to the fifth embodiment of the present invention.

Hereinafter, terms are defined as shown in Table 6.

**Table 6**

| | |
|---|---|
| PDCP control PDU | PDCP PDU containing PDCP control information, to which PDCP SN is not assigned. |
| PDCP data PDU | PDCP PDU containing PDCP control information or PDCP SDU, to which PDCP SN is assigned. |
| RLC control PDU RLC control PDU | RLC PDU containing RLC control information, to which RLC SN is not assigned. |
| RLC data PDU | RLC PDU containing RLC SDU, to which RLC SN is assigned. |

In step 1705, when PDCP control information is generated, a PDCP entity proceeds to step 1710.

In step 1710, the PDCP entity determines whether the occurring PDCP control information corresponds to PDCP control information type 1 or PDCP control information type 2. If it is determined that the PDCP control information corresponds to the PDCP control information type 1, step 1720 is performed, but if it is determined that the PDCP control information corresponds to the PDCP control information type 2, step 1715 is performed.

The PDCP control information type 1 and PDCP control information type 2 may be defined as follows:
* PDCP control information type 1: PDCP control messages which either necessitates in-sequence delivery, or which requires the same transmission reliability as that of a PDCP data PDU although without necessitating in-sequence delivery. For example, ROHC feedback information is included in the PDCP control information type 1.
* PDCP control information type 2: PDCP control messages which do not necessitate in-sequence delivery and do not require the same transmission reliability as that of a PDCP data PDU.

Here, the "control information necessitating in-sequence delivery" may be defined, in other words, as control information which may cause a malfunction when the control information is transferred to a counterpart, i.e., to a receiving-side PDCP entity, earlier than its actual generation order.

For example, the "control information necessitating in-sequence delivery" includes control information which contains the state of a specific PDU. In more detail, PDCP control information including ROHC feedback information must be transferred to the receiving-side PDCP entity in the in-sequence delivery.

Therefore, in step 1720, the PDCP entity maps the PDCP control information to an RLC data PDU. Consequently, the PDCP control information is stored in an RLC transmission buffer, is assigned an appropriated RLC serial number, and is transmitted after PDCP PDUs generated earlier than the PDCP control information has all been transmitted. An RLC entity, which performs the in-sequence delivery function based on RLC serial numbers, transmits a counterpart PDCP entity according to the order of the PDCP control information.

Meanwhile, it is preferred that control information corresponding to the PDCP control information type 2 is transmitted as soon as possible. In step 1715, the PDCP entity maps the PDCP control information to an RLC control PDU. Consequently, the PDCP control information is directly transferred to a receiving-side PDCP entity at the precise moment when the PDCP control information arrives at a counterpart RLC entity, regardless of sequence rearrangement of RLC data PDUs.

### <<Sixth Embodiment>>

The sixth embodiment of the present invention provides a method and apparatus for inserting even PDCP control information necessitating in-sequence delivery into an RLC control PDU, and transmitting the PDCP control information. There is provided a method in which RLC control information which contains PDCP control information necessitating in-sequence delivery additionally contains assistant information for in-sequence delivery, and are transmitted.

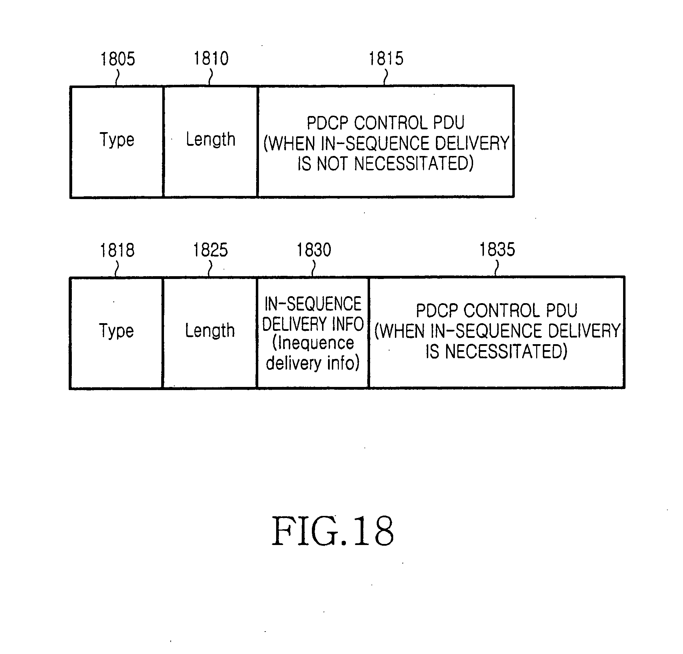

FIG. 18 is a view illustrating the structure of an RLC control PDU containing PDCP control information according to the sixth embodiment of the present invention.

Generally, an RLC control PDU includes a field (type field) representing the type of control information, a field (length field) representing the length of control information, and control information.
1. A type field 1805 of an RLC control PDU, which contains a PDCP control PDU that does not necessitate in-sequence delivery, includes a value indicating that the PDCP control PDU that does not necessitate in-sequence delivery has been contained. A length field 1810 is assigned a value indicating the length of the RLC control PDU, and the PDCP control PDU is contained.
2. A type field 1820 of an RLC control PDU, which contains a PDCP control PDU necessitating in-sequence delivery, includes a value indicating that the PDCP control PDU necessitating in-sequence delivery has been contained. A length field 1825 is assigned a value indicating the length of the RLC control PDU, and in-sequence delivery information 1830 and the PDCP control PDU 1835 are included in an area next to the length field 1825. Here, the in-sequence delivery information functions to assist in-sequence delivery execution of an RLC receiving apparatus, which has received an RLC control PDU.

As described above, performing in-sequence delivery for a PDU "x" means transmitting the PDU x to an upper layer after all PDUs generated or transmitted earlier than the PDU x have been transmitted to an upper layer, in which serial numbers are required for performing in-sequence delivery.

If an RLC control PDU is not assigned a serial number, it is impossible to perform in-sequence delivery only with the RLC control PDU. Therefore, according to the sixth embodiment of the present invention, when an RLC control PDU necessitates in-sequence delivery, the RLC control PDU is transmitted after including a serial number of a PDU which must be transmitted earlier than the RLC control PDU to an upper layer.

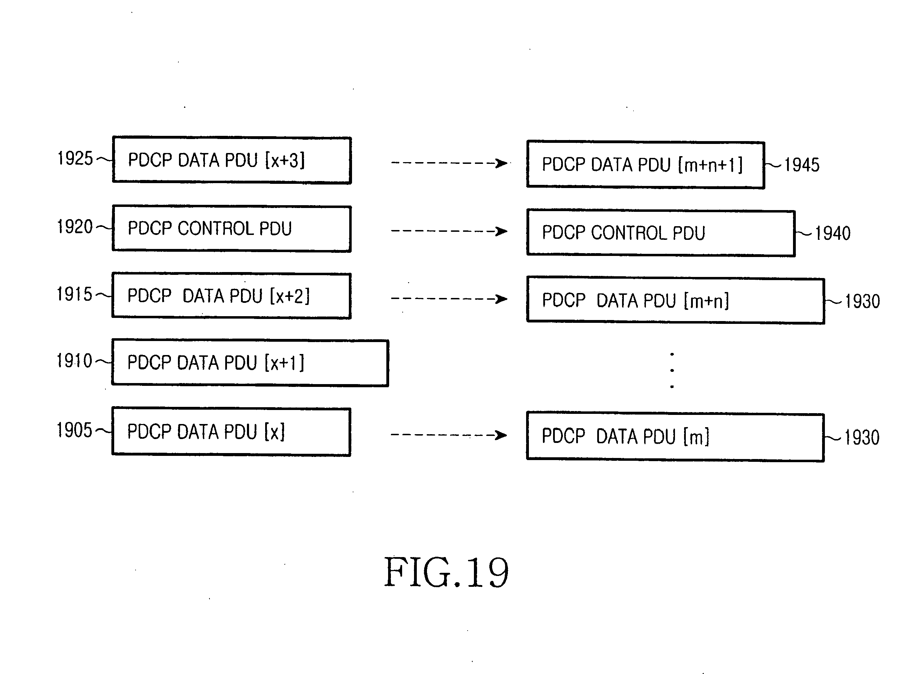

FIG. 19 is a view illustrating a mapping relation between a PDCP packet and an RLC packet according to an exemplary embodiment of the present invention, in which a transmission procedure of a packet necessitating in-sequence delivery is shown.

For example, it is assumed that a PDCP control PDU 1920 is generated after PDCP data PDU [x] 1905 to PDCP data PDU [x+2] 1915 have been generated. If the PDCP control PDU necessitates in-sequence delivery, the PDCP control PDU must be processed after the PDCP data PDU [x+2] has been processed.

Also, for example, when the PDCP data PDU [x+2] is contained in an RLC data PDU [m+n], and the PDCP control PDU is contained in an RLC control PDU, the PDCP control PDU contained in the RLC control PDU must be transferred to a PDCP layer after the RLC data PDU [m+n] has been assembled into a PDCP data PDU and has been transferred to the PDCP layer.

As described with reference to FIG. 19, the in-sequence delivery information may be either the PDCP serial number of a PDCP data PDU generated just before the PDCP control PDU, or the RLC serial number of an RLC data PDU containing a PDCP data PDU generated just before the PDCP control PDU.

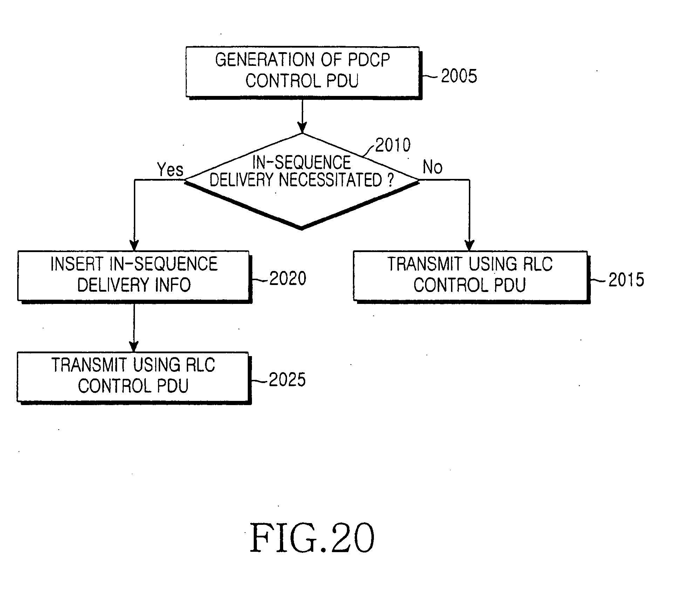

FIG. 20 is a view illustrating the operation for transmitting a PDCP control PDU according to the sixth embodiment of the present invention.

When a PDCP control PDU is generated in step 2005, a transmitting apparatus proceeds to step 2010, in which it is checked if the PDCP control PDU necessitates in-sequence delivery. Here, whether or not in-sequence delivery is necessitated may be determined according to types of PDCP control PDUs in advance. Based on a result of the checking, the transmitting apparatus proceeds to step 2020 when it is determined that the PDCP control PDU necessitates in-sequence delivery, and proceeds to step 2015 when the PDCP control PDU does not necessitate in-sequence delivery.

In step 2015, the transmitting apparatus inserts the PDCP control PDU into an RLC control PDU and transmits the RLC control PDU, in which the RLC control PDU does not include in-sequence delivery information.

Meanwhile, in step 2020, the transmitting apparatus determines in-sequence delivery information for the PDCP control PDU. As described above, the in-sequence delivery information may be defined as either the PDCP SN of a PDCP data PDU generated just before the PDCP control PDU, or the RLC SN of an RLC data PDU containing a PDCP data PDU generated just before the PDCP control PDU.

In step 2025, the transmitting apparatus inserts the PDCP control PDU and the in-sequence delivery information into an RLC control PDU, and transmits the RLC control PDU.

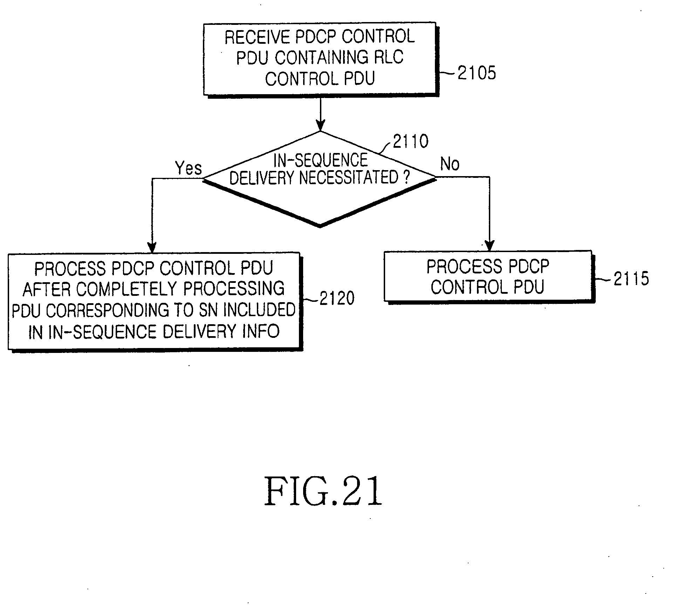

FIG. 21 is a view illustrating a receiving operation according to the sixth embodiment of the present invention.

In step 2105, a receiving apparatus receives a PDCP control PDU contained in an RLC control PDU.

In step 2110, the receiving apparatus checks if the RLC control PDU includes control information representing that in-sequence delivery is necessitated. If the RLC control PDU includes control information representing that in-sequence delivery is necessitated, the receiving apparatus proceeds to step 2120, but if the RLC control PDU corresponds to information that does not necessitate in-sequence delivery, the receiving apparatus proceeds to step 2115.

In step 2115, the receiving apparatus immediately processes the PDCP control PDU. In other words, the RLC entity immediately transfers the PDCP control PDU to the PDCP entity, and the PDCP entity processes a PDCP packet according to control information contained in the PDCP control PDU.

Meanwhile, in step 2120, the receiving apparatus is in a waiting state until a PDU corresponding to a serial number contained in in-sequence delivery information has been processed, and then processes the PDCP control PDU. That is, when an RLC SN is contained in the in-sequence delivery information, the RLC entity transfers the PDCP control PDU to the PDCP entity after assembling an RLC PDU corresponding to the serial number into a PDCP PDU and transferring the PDCP PDU to the PDCP layer.

In other words, after completing an in-sequence delivery operation for the RLC PDU corresponding to the serial number, the RLC entity transfers the PDCP control PDU to the PDCP entity.

As described above, when a PDCP SN is contained in in-sequence delivery information, the RLC entity transfers a PDCP control PDU, together with the in-sequence delivery information, to the PDCP entity, as soon as it receives the PDCP control PDU. Accordingly, the PDCP entity processes the PDCP control PDU after completing the processing of the PDCP PDU corresponding to the serial number.

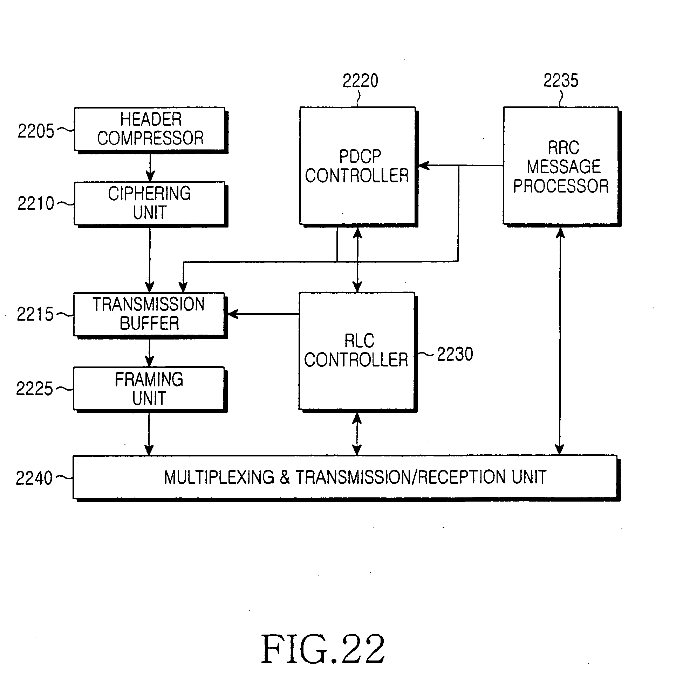

FIG 22 is a block diagram illustrating the configuration of the transmitting apparatus according to the first, second, and third embodiments of the present invention.

A PDCP transmitting apparatus includes a header compressor 2205, a ciphering unit 2210, and a PDCP controller 2220, and a transmitting-side RLC apparatus includes a transmission buffer 2215, a framing unit 2225, an RLC controller 2230.

According to the first embodiment of the present invention, when the RLC controller 2230 receives an RLC control message containing a PDCP RESET packet, the RLC controller 2230 transfers the PDCP RESET control message to the PDCP controller 2220.

When receiving the PDCP RESET control message, the PDCP controller 2220 newly sets an HFN and initializes a PDCP SN after instructing data stored in the transmission buffer 2215 to be discarded and data transmission to be stopped.

Then, the PDCP controller 2220 creates a PDCP RESET ACK message containing the newly set HFN, and transfers the PDCP RESET ACK message to the RLC controller 2230. The RLC controller 2230 inserts the PDCP RESET ACK message into a predetermined RLC control message and transmits the RLC control message to a receiving-side RLC apparatus. In addition, when the RLC controller 2230 receives an acknowledgement signal for the RLC control message, which contains the PDCP RESET ACK message, from the receiving-side RLC apparatus, the RLC controller 2230 notifies the PDCP controller 2220 of the received acknowledgement signal.

When the PDCP controller 2220 is notified that the RLC control message containing the PDCP RESET ACK message has been successfully transmitted, the PDCP controller 2220 instructs the transmission buffer 2215 to resume data transmission.

Also, according to the second embodiment of the present invention, a PDCP RESET message is inserted, together with an RLC STP control message, into an RLC control message, and is transmitted. When the PDCP controller 2220 receives the RLC STOP control message, the PDCP controller 2220 controls the transmission buffer 2215 to stop data transmission, and transfers the PDCP RESET message, which has been received together with the RLC STOP control message, to the PDCP controller 2220. The following operation according to the second embodiment of the present invention is the same as that of the first embodiment of the present invention, so a detailed description thereof will be omitted.

Also, according to the third embodiment of the present invention, when receiving a PDCP re-establishment request message, an RRC message processor 2235 instructs the PDCP controller 2220 to re-configure the header compressor 2205 and ciphering unit 2210. Then, when PDCP re-establishment has been completed, the RRC message processor 2235 controls the transmission buffer 2215 to discard data stored in the transmission buffer 2215. Then, a control operation is performed to resume data transmission, starting with subsequently-arriving PDCP PDUs.

When receiving an RLC STOP control message, the RLC controller 2230 stops data transmission and is in a waiting state until it receives a transmission resumption instruction from an upper layer, although the RLC transmission buffer 2215 stores data.

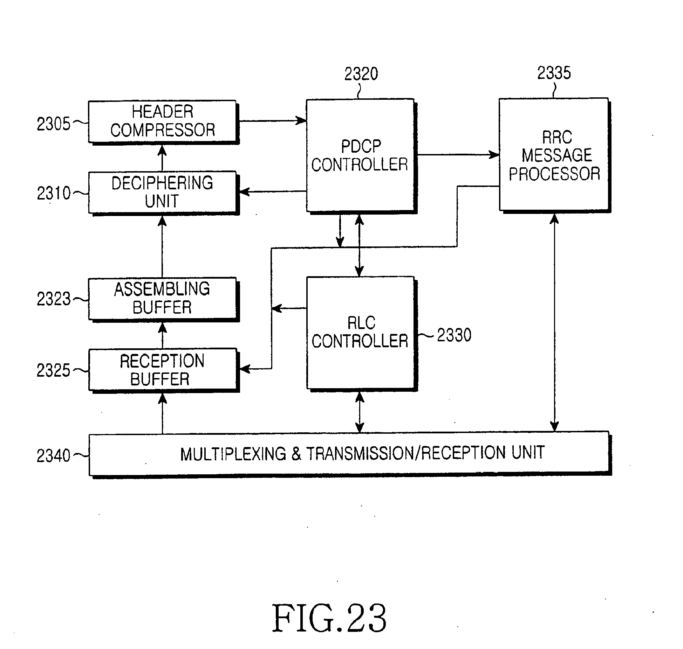

FIG 23 is a block diagram illustrating the configuration of the receiving apparatus according to the first, second, and third embodiments of the present invention.

A receiving apparatus includes a header decompressor 2305, a deciphering unit 2310, and a PDCP controller 2320, and a receiving-side RLC apparatus includes an assembling unit 2323, a reception buffer 2325, and an RLC controller 2330.

According to the first embodiment of the present invention, the PDCP controller 2320 monitors the deciphering unit 2310 so as to determine if a PDCP RESET generation condition has been met. When the PDCP RESET generation condition has been met, the PDCP controller 2320 creates and transfers a PDCP RESET message to the RLC controller 2330.

The RLC controller 2330 inserts the PDCP RESET message received from the PDCP controller 2320 into a predetermined RLC control message, and transfers the RLC control message to the RLC controller of a receiving-side RLC apparatus.

When receiving an RLC control message containing a PDCP RESET ACK message from the receiving-side RLC apparatus, the RLC controller 2330 transfers the PDCP RESET ACK message to the PDCP controller 2320.

When receiving the PDCP RESET ACK message, the PDCP controller 2320 updates an HFN, initializes a PDCP SN, and then controls the reception buffer 2325 to discard data stored therein.

Also, according to the second embodiment of the present invention, the PDCP controller 2320 checks if a PDCP RESET generation condition has been met, and creates and transfers a PDCP RESET message to the RLC controller 2330, if necessary. The RLC controller 2330 creates and transmits an RLC control message, which contains the PDCP RESET message and an RLC STOP message, to the RLC controller of a transmitting-side RLC apparatus. Other operations according the second embodiment of the present invention are the same as those according to the first embodiment of the present invention, so a detailed description thereof will be omitted.

Also, according to the third embodiment of the present invention, the PDCP controller 2320 monitors the header decompressor 2305 and determines whether a deciphering failure has occurred. When a deciphering failure has occurred, the PDCP controller 2320 performs an HFN correction process. When the HFN correction process has failed, the PDCP controller 2320 notifies the RRC message processor 2235 that an unrecoverable error has occurred.

When being notified that an unrecoverable error has occurred from the PDCP controller 2320, the RRC message processor 2335 creates and transmits a PDCP re-establishment request message to a transmitting-side RRC message processor through a transmitting/receiving unit 2340.

When the PDCP re-establishment process has been completed, the RLC controller 2330 is controlled to discard data stored in the reception buffer 2325.

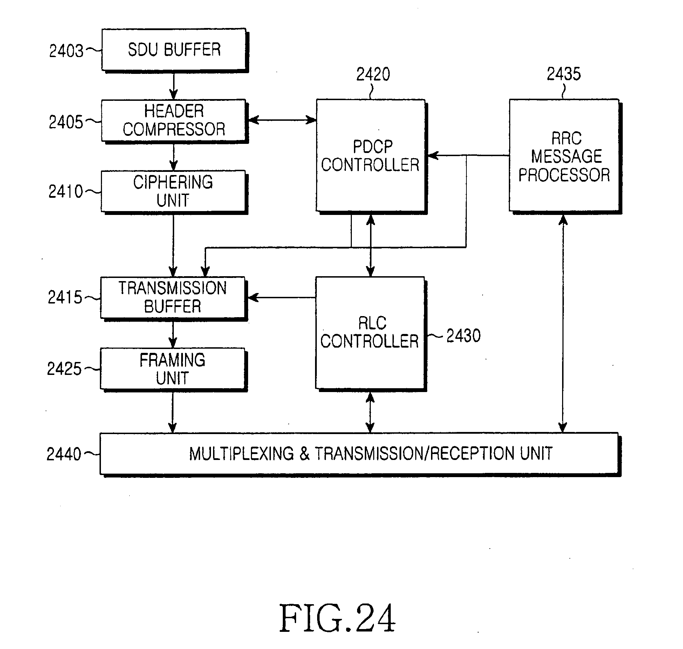

FIG. 24 is a block diagram illustrating the configuration of the transmitting apparatus according to the fourth, fifth, and sixth embodiments of the present invention. The transmitting apparatus represents an apparatus which leads to transmitting a PDCP data PDU, and can perform both a transmitting apparatus's function and a receiving apparatus's function with respect to PDCP control PDUs.

A PDCP transmitting apparatus includes an SDU buffer 2403, a header compressor 2405, a ciphering unit 2410, and a PDCP controller 2420, and an RLC apparatus includes a transmission buffer 2415, a framing unit 2425, and an RLC controller 2430.

According to the fourth embodiment of the present invention, when a RRC message processor 2435 has received an L2 RESET REQUEST message, the RRC message processor 2435 instructs the PDCP controller 2420 to identify a PDCP SDU corresponding to the highest normal PDCP SN. In addition, the RRC message processor 2435 instructs the PDCP controller 2420 to re-configure the header compressor 2405 and the ciphering unit 2410. Then, the RRC message processor 2435 acquires an HFN to be used after a PDCP RESET from the ciphering unit 2410, and transmits an L2 RESET RESPONSE message including the HFN information to a counterpart, i.e., to a receiving-side RRC entity.

When the L2 RESET RESPONSE message has been transmitted, the RRC message processor 2435 notifies the PDCP controller 2420 that the L2 RESET RESPONSE message has been transmitted, and the PDCP controller 2420 requests a PDC entity and an RLC entity to be reset. Then, PDCP transmission is resumed, starting with a PDCP SDU corresponding to the highest normal PDCP SN.

Here, the PDCP controller 2420 re-establishes a PDCP according to the PDCP re-establishment instruction, and controls the transmission buffer 2415 to discard data stored in the transmission buffer 2415. Then, the transmission buffer 2415 is controlled to resume data transmission, starting with PDCP PDUs arriving after the PDCP re-establishment.

Also, according to the fifth embodiment of the present invention, when the RLC controller 2430 has received an RLC control PDU containing a PDCP control PDU, the RLC controller 2430 transfers the PDCP control PDU to the PDCP controller 2420. The PDCP controller 2420 checks the contents of the PDCP control PDU, and performs a required operation.

That is, according to the fifth embodiment of the present invention, when receiving an RLC control PDU containing a PDCP control PDU, the RLC controller 2430 checks if the RLC control PDU contains information representing control information which necessitates in-sequence delivery. When the RLC control PDU does not contain information representing control information which necessitates in-sequence delivery, the PDCP control PDU is immediately transferred to the PDCP controller 2420.

Meanwhile, according to the sixth embodiment of the present invention, when the RLC control PDU contains information representing control information which necessitates in-sequence delivery, an RLC data PDU corresponding to a serial number included in the information representing control information which necessitates in-sequence delivery is transferred to a PDCP layer, before the PDCP control PDU is transferred to the PDCP controller 2420.

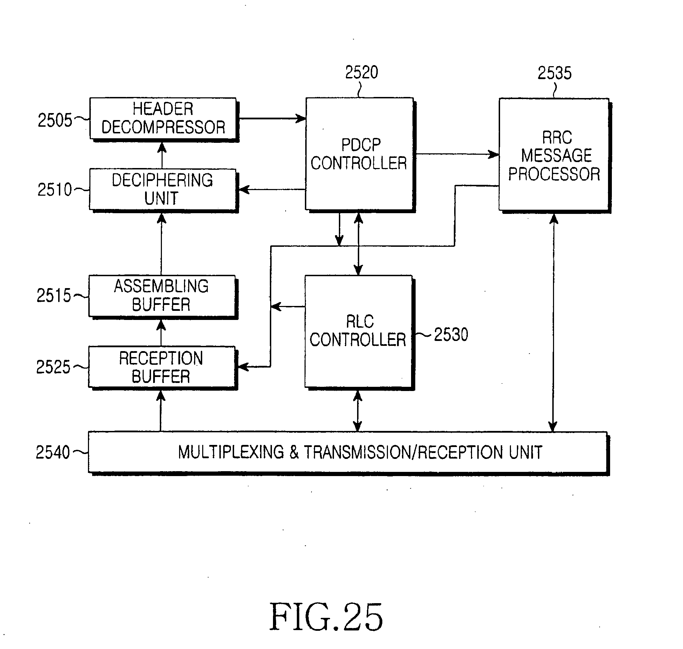

FIG. 25 is a block diagram illustrating the configuration of the receiving apparatus according to the fourth, fifth, and sixth embodiments of the present invention.

A receiving apparatus includes a header decompressor 2505, a deciphering unit 2510, and a PDCP controller 2520, and a receiving-side RLC apparatus includes an assembling unit 2515, a reception buffer 2525, and an RLC controller 2530.

According to the fourth embodiment of the present invention, the PDCP controller 2520 monitors the header decompressor 2505, and determines whether a PDCP RESET generation condition has been met. When the PDCP RESET generation condition has been met, the PDCP controller 2520 notifies a RRC message processor 2535 that the PDCP RESET generation condition has been met.

When the RRC message processor 2535 has been notified that the PDCP RESET generation condition has been met, the RRC message processor 2535 creates and transfers an L2 RESET REQUEST message to a counterpart, i.e., to a transmitting-side RRC message processor. Also, when receiving an L2 RESET RESPONSE message from the transmitting-side RRC message processor, the RRC message processor 2535 transfers an HFN contained in the received message to the deciphering unit 2510. That is, the RRC message processor 2535 instructs the PDCP controller 2520 to newly configure the header decompressor 2505 and the deciphering unit 2510.

According to the fifth embodiment of the present invention, when a PDCP control PDU has been generated, the PDCP controller 2520 determines whether the PDCP control PDU necessitates in-sequence delivery. Then, when the PDCP control PDU necessitates in-sequence delivery, the PDCP controller 2520 controls the RLC controller 2530 to insert the PDCP control PDU into an RLC data PDU and to transmit the PDCP control PDU. In contrast, when the PDCP control PDU does not necessitate in-sequence delivery, the PDCP controller 2520 controls the RLC controller 2530 to insert the PDCP control PDU into an RLC control PDU and to transmit the PDCP control PDU.

According to the sixth embodiment of the present invention, when a PDCP control PDU has been generated, the PDCP controller 2520 determines whether the PDCP control PDU necessitates in-sequence delivery. When the PDCP control PDU necessitates in-sequence delivery, the PDCP controller 2520 inserts the PDCP control PDU into an RLC control PDU, and controls the RLC controller 2530 to transmit the RLC control PDU, together with the in-sequence delivery information. Here, the in-sequence delivery information may be either the PDCP serial number of a PDCP data PDU generated just before the PDCP control PDU, or the RLC serial number of an RLC data PDU containing a PDCP data PDU generated just before the PDCP control PDU. In contrast, when the PDCP control PDU does not necessitate in-sequence delivery, the PDCP controller 2520 controls the RLC controller 2530 to insert the PDCP control PDU into an RLC control PDU and to transmit the PDCP control PDU without in-sequence delivery information.

According to the present invention, when a deciphering of ciphered packets including a compressed header has failed in a mobile communication system, a receiving apparatus notifies a transmitting apparatus of the deciphering failure in the form of control information, thereby more rapidly preventing loss of packets. Such a construction has an advantage in that it is possible to improve quality of service in a mobile communication system in which a large amount of packets are transmitted at a high speed. That is, the present invention has an advantage in that the present invention can prevent deterioration of quality of service.

Also, the present invention makes it possible to efficiently use limited radio resources. That is, when ciphering and deciphering are not synchronized with each other, the present invention prevents both apparatuses from transmitting/receiving packets, without recognizing the fact, thereby leading to efficient use of transmission resources. Accordingly, the present invention also has advantages in that useless packet transmission/reception is prevented, and system nodes' processing loads due to the useless packet transmission/reception is reduced.

In addition, through synchronization re-establishment for ciphering and deciphering between the transmitting apparatus and receiving apparatus, the present invention basically solves the deciphering failure, and prevents unnecessary control signaling and packet loss from occurring.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for transmitting/receiving a ciphered packet in a mobile communication system, the method comprising the steps of:
sensing, by a receiving-side Packet Data Convergence Protocol (PDCP) entity, that header restoration of a received packet has failed, and transmitting a PDCP reset message to a transmitting-side PDCP entity;
when receiving the PDCP reset message, transmitting, by the transmitting-side PDCP entity, a response message that includes a new hyper-frame number used for ciphering of a compressed header to the receiving-side PDCP entity; and
receiving, by the receiving-side PDCP entity, the response message, and deciphering packets received after PDCP reset by means of the new hyper-frame number.

2. The method as claimed in claim 1, wherein when a header-restored packet is not output from a header decompressor, although the receiving-side PDCP entity has input a packet to the header decompressor, the receiving-side PDCP entity determines that the header restoration of the packet has failed.

3. The method as claimed in claim 1, wherein, in transmitting the PDCP reset message to the transmitting-side PDCP entity, the receiving-side PDCP entity transmits the PDCP reset message to the transmitting-side PDCP entity through a receiving-side Radio Link Control (RLC) entity in a form of a control message.

4. The method as claimed in claim 1, further comprising, when the transmitting-side PDCP entity has received the PDCP reset message, discarding, by the transmitting-side PDCP entity, PDCP data stored in an RLC transmission buffer.

5. The method as claimed in claim 1, further comprising stopping, by the transmitting-side PDCP entity, transmission of the PDCP data pre-stored in a transmission buffer until the transmitting-side PDCP entity receives packets including the newly set hyper-frame number.

6. The method as claimed in claim 1, wherein the hyper-frame number corresponds to most significant bits having a predetermined length, among PDCP count parameters set corresponding to serial numbers of the packets.

7. The method as claimed in claim 3, further comprising transmitting, by the receiving-side RLC entity, the PDCP initialization message to a transmitting-side RLC entity after inserting the PDCP initialization message into an RLC STOP message, and stopping, by the transmitting-side RLC entity, transmission when the transmitting-side RLC entity has received the RLC STOP message.

8. A method for transmitting/receiving a ciphered packet in a mobile communication system, the method comprising the steps of:
sensing, by a receiving-side Packet Data Convergence Protocol (PDCP) entity, a failure of header restoration of a received packet;
when the header restoration of the received packet has failed, transmitting, by the receiving-side PDCP entity, a message informing that PDCP re-establishment is required to a transmitting-side Radio Resource Control (RRC) entity through a receiving-side RRC entity; and
performing, by the receiving-side RRC entity and the transmitting-side RRC entity, the PDCP re-establishment.

9. The method as claimed in claim 8, further comprising when the header restoration of the received packet has failed, increasing or decreasing, by the receiving-side PDCP entity, a hyper-frame number by one in connection with deciphering of the received packet, and performing synchronization with a hyper-frame number of a transmitting-side PDCP entity.

10. The method as claimed in claim 8, wherein, in sensing a failure of the header restoration of the received packet, the receiving-side PDCP entity determines that the header restoration of the received packet has failed, when a header-decompressed packet is not output from a header decompressor although the receiving-side PDCP entity has input the received packet to the header decompressor.

11. The method as claimed in claim 8, wherein transmitting the message informing that PDCP re-establishment is required comprises :
reporting, by the receiving-side PDCP entity, an error occurrence to the receiving-side RRC entity when sensing that the synchronization has failed;
transmitting, by the receiving-side RRC entity, an identifier representing a packet error occurrence to a receiving-side RLC entity;
transmitting, by the receiving-side RLC entity, a packet transmission stop message to a transmitting-side RLC entity, after inserting the packet transmission stop message into an RLC control message; and
transmitting, by the receiving-side RRC entity, a message reporting that PDCP re-establishment is required to the transmitting-side RRC entity, performing PDCP re-establishment, and transmitting PDCP re-establishment packets that are newly configured through the performance of PDCP re-establishment.

12. The method as claimed in claim 11, further comprising a step ofdiscarding, by the receiving-side RLC entity, the packets stored in a reception buffer.

13. A method for transmitting/receiving a ciphered packet in a mobile communication system, the method comprising
determining, by a receiving apparatus, to initialize a Packet Data Convergence Protocol (PDCP) when sensing that deciphering of a received packet has failed, and transmitting a Layer 2 RESET REQUEST message including a serial number of a highest packet, a header of which has been decompressed without error, to a transmitting apparatus;
performing, by the transmitting apparatus, PDCP initialization in response to the Layer 2 RESET REQUEST message, newly determining a hyper-frame number in connection with ciphering for transmission of a packet next to a packet with the serial number, and transmitting a Layer 2 RESET RESPONSE message including the newly determined hyper-frame number to the receiving apparatus; and
performing, by the receiving apparatus, deciphering with respect to packets next to the packet of the serial number, by means of the newly determined hyper-frame number, thereby receiving the packets.

14. The method as claimed in claim 13, wherein the serial number of the highest packet corresponds to a value one higher than a highest serial number, among serial numbers of packets determined to have been normally received by the receiving apparatus.

15. An apparatus for transmitting a ciphered packet in a mobile communication system, the apparatus comprising:
a Packet Data Convergence Protocol (PDCP) controller for receiving a message for PDCP initialization setting from a Radio Link Control (RLC) controller, setting a hyper-frame number corresponding to ciphering of the packet, and performing a control operation such that the hyper-frame number is inserted into a response message and is transmitted; and
a transmission buffer for storing and discarding packets according to an instruction of the PDCP controller.

16. The apparatus as claimed in claim 15, further comprising the RLC controller, which creates the response message including a PDCP reset message and transmits the response message through a control message to a receiving apparatus, according to an instruction of the PDCP controller.

17. The apparatus as claimed in claim 15, wherein the RLC controller transmits a control packet including the newly set hyper frame number through the control message to a receiving apparatus.

18. The apparatus as claimed in claim 16, wherein the RLC controller receives a PDCP reset message through an RLC control message from the receiving apparatus.

19. The apparatus as claimed in claim 15, further comprising a Radio Resource Control (RRC) message processor for receiving a message to request PDCP re-establishment from a receiving apparatus, and controlling a header compressor and a ciphering unit.

20. An apparatus for receiving a ciphered packet in a mobile communication system, the apparatus comprising:
a Packet Data Convergence Protocol (PDCP) controller for performing header restoration with respect to received packets including a compressed header, determining PDCP reset when it is sensed that the restoration has failed, and receiving a response message that includes a hyper-frame number newly determined corresponding to the PDCP reset from a transmitting apparatus; and
a Radio Link Control (RLC) controller for notifying the transmitting apparatus of the PDCP reset through a control message, and storing or discarding the received packet according to a control of the PDCP controller.

21. The apparatus as claimed in claim 20, wherein, when a header-decompressed packet is not output from a header decompressor although the PDCP controller has input a packet to the header decompressor, the PDCP controller determines that header restoration of the packet has failed.

22. The apparatus as claimed in claim 20, wherein the PDCP controller creates and transmits an identifier representing a packet restoration failure to a Radio Resource Control (RRC) entity after sensing that the header restoration has failed.

23. The apparatus as claimed in claim 22, the PDCP controller performs a correction of the hyper-frame number after sensing that the header restoration n has failed.

24. The apparatus as claimed in claim 22, further comprising an RRC message processor for receiving the identifier, creating an RRC message requesting PDCP re-establishment, and transmitting the created RRC message to the transmitting apparatus.
